# EUROPEAN PATENT SPECIFICATION

(11) **EP 4 084 547 B1**
(45) Date of publication and mention of the grant of the patent: **30.08.2023**
(21) Application number: 21305536.1
(22) Date of filing: 26.04.2021
(51) Int. Cl.: H04W 72/02, H04W 72/20, H04W 72/52

(54) **AUTONOMOUS INTER-TERMINAL RADIO RESOURCE SHARING FOR DEVICE-TO-DEVICE COMMUNICATIONS**
AUTONOME GEMEINSAME FUNKRESSOURCENBENUTZUNG ZWISCHEN ENDGERÄTEN FÜR GERÄT-ZU-GERÄT-KOMMUNIKATION
PARTAGE AUTONOME DE RESSOURCES RADIO ENTRE TERMINAUX POUR COMMUNICATIONS DE DISPOSITIF À DISPOSITIF

(43) Date of publication of application: 02.11.2022
(73) Proprietor: Mitsubishi Electric R&D Centre Europe B.V., 1119 NS Schiphol Rijk Amsterdam (NL); Mitsubishi Electric Corporation, Tokyo 100-8310 (JP)
(72) Inventor: SHEHATA, Mohamed, 35708 RENNES CEDEX 7 (FR); SIBEL, Jean-Christophe, 35708 RENNES CEDEX 7 (FR); GRESSET, Nicolas, 35708 RENNES Cedex 7 (FR)
(74) Representative: Plasseraud IP

(56) References cited:
- WO-A1-2020/024854
- US-A1- 2021 092 783
- US-A1- 2021 105 815

## Description

The present invention relates to the field of wireless communications and particularly to the selection of resources for vehicle-to-everything (V2X) communications.

Fifth-Generation New Radio based Vehicle-to Everything (5G NR V2X) communications refer to a Radio Access Technology (RAT) enabling Vehicle-to Everything (V2X) communications and aiming at providing ultra-reliable and low latency wireless communications for applications such as autonomous driving. Moreover, the development of direct communication modes (or sidelink transmissions) introduced in the Release 14 of the 3^{rd} Generation Partnership Project (3GPP) system standard enables device (V-UEs, or vehicular devices) to communicate with other devices (V2V) and pedestrians (V2P) without relying on cellular networks. As NR V2X technology continues to evolve, direct communication modes are specified in the context of NR V2X in order to continuously improve the autonomous driving use cases towards advanced V2X applications through higher reliability, lower latency and higher data rate.

In particular, NR V2X makes use of direct communication (or D2D) of device (V-UEs) to improve Radio Resource Management (RRM) for data and control sidelink transmissions over the wireless communication network. In NR V2X sidelink mode 2 for instance, radio resources are autonomously selected within a resource pool by the device (V-UEs) using distributed sensing-based schemes, without the intervention of cellular network entities such as base stations. The development of the autonomous radio resource management using D2D communications ensures the reliability of devices even in remote and out-of-bound areas where the cellular coverage is low to none.

However, latency budget and frequency bandwidth constraints of the resource pool, vehicle density within the network as well as V-UEs respective needs for resources regularly lead to a congested resource pool and spectrum scarcity. The inability to reserve sufficient radio resources for transmission for some device (V-UEs) leads to higher latency and less reliability of the V2X application.

Existing congestion control methods consist either in having some device wait for another available selection window in the resource pool or proceed to selective transmissions through data packet dropping or pre-emption mechanisms. Yet, such methods still present latency and reliability issues for the concerned vehicular devices, leading to an overall performance degradation of the V2X application.

WO 2020/024854 A1 discloses a user equipment (UE) that, upon accessing an unlicensed channel successfully , transmits an indication to another UE to share a channel occupancy time.

The present invention addresses such problems as mentioned above.

A first aspect of the invention proposes a method implemented by a first device to share at least one resource element within a wireless communication network, the resource element belonging to a first set of radio resources allocated to the first device within a resource pool, the first device using a device-to-device communication within the wireless communication network,
and wherein the first device emits, through the device-to-device communication, an indication that the resource element is available for sharing, said indication being emitted based on a primary criterion, said primary criterion being related to at least a value related to a congestion level within the resource pool.

Therefore, the invention proposes a method to enhance resource allocation of devices and addresses spectrum scarcity, latency and reliability issues in a wireless communication network. The method notably enables to optimize the reliability of Vehicular-To-Everything (or V2X) applications by proposing an alternative to existing radio resource management (RRM) methods concerning vehicular user equipment.

Indeed, the invention proposes a sharing of resource elements between devices using direct communication (or device-to-device communication, or D2D). Such sharing is initiated and indicated by a first device and makes available at least one resource element which is part of a first set of radio resources allocated to the first device. As a consequence, another device may obtain and utilize resource elements for its own transmissions without necessarily obtaining allocated radio resources from a resource pool after triggering a successful resource selection procedure or may even obtain resource elements for its own transmissions without performing a complete existing radio resource selection procedure at all.

Existing resource selection procedures for obtaining allocated radio resources may consist in a device launching a distributed resource selection procedure by resource sensing methods enabling the device to identify available radio resources in a resource pool and proceed to select its radio resources for its own transmissions. The allocated radio resources may also result from a network scheduling, the network allocating radio resources to the device after a resource request procedure launched by the device to the network.

Therefore, the method provides to other devices an alternative process to obtain allocated resources, when such other devices may either not perform an existing resource selection procedure or may not be able to successfully obtain allocated resources for their transmissions through the existing resource selection procedures.

In particular, the method enables to address the spectrum scarcity encountered by other devices, for example when the resource pool is congested, and existing resource selection procedures fail to allocate radio resources to such devices. Such unsuccessful resource selection procedures may lead to such devices being unable to perform their own transmissions by respecting their service and latency requirements or to proceed to existing congestion control methods which decrease the overall reliability of the V2X application.

By indicating that a resource element initially allocated to the first device is available for sharing, the method introduces a flexibility to the existing resource allocation scheme and enables devices of the network to assure their own transmissions using a more flexible and circumstantial way to obtain allocated resources compared to the existing procedure.

The method also enables the first device to propose a reallocation of a potentially unused or unnecessary resource element of the first set of radio resources allocated to the first device, thus enabling to optimize the allocation of resource elements among the devices of the wireless communication network and avoid resource waste. Indeed, the first set of radio resources allocated to the first device may result from a resource selection procedure performed by the first device in the resource pool. A resource structure of the resource pool may consist in radio resources being defined as a unitary time-frequency block composed by one slot of time and one or several subchannels of frequency. As a result, the first device may obtain an amount of radio resources allocated to the first device which the first device may not fully utilize for its own transmissions, depending for example on the quantity of service data packets the first device has to transmit, on its link budget and/or on its Quality of Service (QoS) requirements.

By wireless communication network, it is referred to a geographical region on the Earth surface covered by one or several base stations, each base station serving a specific area, called a cell. The wireless communication network also includes several types of units or users, such as smart infrastructures, stationary devices or mobile devices. Considered units (or users) of the wireless communication network have electronics, software, sensors, or the like embedded so as to present a connectivity. This enables such units to collect and exchange data and control across an infrastructure of the wireless communication network.

By first device, it is referred to a specific type of units within the wireless communication network, corresponding to a ground-based vehicular user equipment. The terms vehicular user equipment, device, vehicle, vehicular device will be used interchangeably in the context of the invention. Such first device may be either a mobile device (in the case of a moving vehicle) or a stationary device (in the case of a stopped vehicle for instance). The first device is considered to be equipped with New Radio (NR) Vehicle-to-everything (V2X) technology.

The first device may also be equipped with specific hardware such as specific antennas and/or antenna array panels enabling the first device to transmit and receive signals in one or several specific dimensions of transmission such as space or polarization. The first device may be able to perform polarization multiplexing, for example in the vertical and horizontal polarization planes and/or beamforming in specific directions in space.

By a first set of radio resources, it is referred to a set of time and frequency-related blocks supporting transmissions of the first device over the wireless communication network, such transmissions enabling the first device to transmit data and control signaling to another unit of the network, for example another device receiving the transmissions of the first device. The first set of radio resources may have a delimited size of one slot in time and a fixed number of subchannels in frequency. The first set of radio resources may be utilized for transmissions performed in a specific period of time and within a specific geographical zone.

By a first set of radio resources allocated to the first device, it is understood a first set of radio resources initially obtained by the first device to support the transmissions of the first device within the specific period of time (initially being understood as before the first device decides to reallocate part of this first set of radio resources by indicating that the resource element is available for sharing). The first set of radio resources allocated to the first device may for example result from a resource selection procedure either launched by the first device or managed by the network. For example, the first set of allocated radio resources may result from a distributed resource selection procedure launched by the first device, the first device sensing available radio resources within a resource pool and selecting its first set of radio resources to support its transmissions. The first set of allocated radio resources may also result from a network-scheduled procedure where the network selects the first set or radio resources from a centralized resource pool and assigns the first set of radio resources to the first device, for example after a resource request procedure launched to the network by the first device.

In the context of the present description, radio resources or set of radio resources "allocated to a device", "reserved for a device" and "selected for a device" may be used interchangeably and commonly understood as radio resources obtained by a device after a resource selection procedure performed in the resource pool (either by the device in a distributed resource allocation scheme or by the network in a centralized resource allocation scheme).

By a resource pool, it is referred to a physical resource grid to which various physical channels and physical signals are mapped. Such a resource pool may be defined as a large set of time and frequency-related blocks containing several sets of radio resources. The resource pool may be considered in the context of New Radio (NR), where the physical channels of the resource pool are multiplexed both in the time and frequency domains. The resource pool contains radio resources used for transmissions in the wireless communication network. Such transmissions may concern specific types of transmissions, for example the transmissions between devices in the context of sidelink communication. Such resource pool may be a centralized resource pool managed by the network and wherein radio resources are scheduled and selected by the network to be allocated to different devices (for their sidelink transmissions for example). The resource pool may also be a resource pool pre-configured by the network so that devices in a predefined geographical region (for example an out-of-coverage region) may select their respective sets of allocated radio resources to support their own transmissions without the network interfering in the resource selection.

By a resource element, it is referred to a unitary time and frequency-related block, composed by strictly one OFDM (Orthogonal frequency-division multiplexing) symbol in the time domain and one resource block (or RB) in the frequency domain. The size of a resource element is inferior to the size of a radio resource and as matter of fact, a radio resource is composed by several resource elements. For example, one slot composing the radio resource in the time domain is composed by 14 OFDM symbols. Several resource elements are thus composed by several OFDM symbols in the time domain and several resource blocks in the frequency domain.

By sharing at least one resource element from the first set of radio resources allocated to the first device, it is thus understood that a delimited number of resource elements composing the first set of radio resources allocated to the first device may be reallocated by the first device and such resource element reallocation is proposed by the first device.

By device-to-device communication (also referred to direct communication or sidelink communication or D2D), it is referred to a direct communication mode enabling several devices to communicate with each other through exchanges of data and control signals over a specific interface (referred to as the PC5 interface in the context of New Radio) and without requiring a signal relay through a base station of the network. The first device using a device-to-device communication refers to the first device transmitting data and control signals to other devices using direct communication. Such direct communication enables devices to communicate even in remote and out-of-coverage areas.

By an indication that the resource element is available for sharing, it is understood a message related to the fact that a resource element allocated to the first device in the resource pool is made available by the first device and that such resource element may be re-allocated to another device to support the transmissions of such another device. The first device emitting, through the device-to-device communication, the indication that the resource element is available for sharing is understood as the first device directly communicating to at least one other device of the network a message about the fact that the first device proposes a resource element reallocated to such other device. The indication may correspond to an actual resource element allocation related to a control information for example. The indication may refer to a control signaling emitted by the first device in a dedicated or non-dedicated way to other devices which use device-to-device communication and may receive control signaling via direct communication. Such indication that the resource element is available for sharing may be initiated by the first device and results from a decision of the first device to reallocate a part of its first set of radio resources, such first set of radio resources being initially obtained to specifically support the transmissions of the first device.

According to an aspect of the invention, the first device emits a sharing signaling message through the device-to-device communication, said sharing signaling message containing at least said indication that the resource element is available for sharing.

Therefore, the first device signals the availability of the resource element via a specific and explicit control signaling message potentially received by several other devices. Such message proposes a reallocation of the resource element without actually imposing the reallocation to any specific other device. Thus, the indication that the resource element is available for sharing may be communicated to devices by a general broadcast/groupcast signaling, and data transmissions of any potential other device may be re-scheduled on the resource element available for sharing if such other device decides to utilize the resource element available for sharing.

By a sharing signaling message, it is understood a control signaling emitted by the first device in order to indicate that the resource element is available for sharing. Such sharing signaling message may for example be a broadcasted or groupcasted signal through D2D.

The indication that the resource element is available for sharing is emitted based on a primary criterion, said primary criterion being related to at least a value related to a congestion level within the resource pool, and said primary criterion may further be related to one or a combination of the following:
- a pre-configuration message enabling or disabling the sharing of the resource element,
- a value related to an availability of the resource element,
- a value related to a channel condition of the wireless communication network, and
- hardware capabilities of the first device.

Therefore, the sharing of the resource element by the first device may be conditioned by an actual capability of the first device to share the resource element to other devices or the presence of favorable channel conditions in the network for utilizing the resource element. The sharing of the resource element may also be conditioned by the fact that a resource element reallocation from the first device to another device is actually useful and benefits the overall functioning of the network, for example in order to reduce a spectrum scarcity and/or a congestion situation in the network.

As a consequence, the first device may not consume energy and potentially resources in order to indicate that a resource element is available for sharing if the first device determines that such sharing may not be necessary, useful and/or actually usable for supporting the transmissions of another device of the network.

By based on a primary criterion, it is understood that the first device may not indicate that the resource element is available for sharing if the content of the primary criterion is not satisfied. As a consequence, before emitting the indication that the resource element is available for sharing, the first device may verify that the primary criterion is satisfied.

By a pre-configuration message enabling or disabling the sharing of the resource element, it is understood a message received from the network or another device or imposed by a resource pool deployed by the network based on a geographic criterion for example. Such message enables or disables the use of shared resource elements according to predefined criteria.

By a value related to an availability of the resource element, it is understood a value determined by the first device based for example on a measurement, an estimation or a calculation, such value reflecting whether the first device has a resource element available for sharing. Such value related to an availability of the resource element may be determined based for example on a size of the first set of radio resources allocated to the first device and a an amount of radio resources actually used by the first device for its transmissions within a predetermined time (for example a Channel Usage Ratio or CR of the first device). If such amount of radio resources actually used by the first device is inferior to the size of the first set of radio resources allocated to the first device, then the size difference (corresponding to one or several resource elements) may correspond to a value related to an availability of the resource element. Such size difference being not null may then be (or be part of) the primary criterion.

By a value related to a congestion level within the resource pool, it is understood a value received from the network or another device or determined by the first device based for example on a measurement, an estimation or a calculation, such value reflecting a level of congestion in the resource pool, for example the Channel Busy Ratio (or CBR) in several recent subframes (one subframe corresponding to a number of slots in the resource pool resulting in a fixed time duration of 1 millisecond) of the resource pool.

By a value related to a channel condition of the wireless communication network, it is understood any value reflecting a condition of propagation of transmissions within the network, such as a Cross Polarization Ratio (or XPR), which reflects the level of orthogonality between two different polarized antennas of transmission of a device for example.

By hardware capabilities of the first device, it is understood hardware functionalities enabling the first device to perform specific transmissions in the network, for example specifically polarized antennas enabling the first device to perform polarization multiplexing or antenna array panels enabling the first device to perform beamforming.

According to an aspect of the invention, the indication that the resource element is available for sharing includes one or a combination of the following:
- at least one bit to indicate a position of the resource element available for sharing,
- at least one bit to indicate a size of the resource element available for sharing,
- at least one bit to indicate a time interval during which the resource element is available for sharing,
- at least one bit to indicate a geographical zone associated with the resource element available for sharing.

Therefore, the first device provides in the indication all necessary information in order to precisely identify the resource element available for sharing. As a consequence, based only on the information provided in the indication by the first device, another device receiving such indication may be able to identify the exact part of a radio resource, within a specific slot and a specific subchannel for example, which is dedicated to the transmissions of such another device.

The information contained in the indication emitted by the first device may also enable other devices receiving such indication to determine whether they may need to and/or be able to utilize the resource element available for sharing or not. Such indication thus prevents ineligible other devices (that is, other devices that do not have the hardware capability to utilize the resource element for example) from failed transmission attempts.

By at least one bit to indicate a position of the resource element available for sharing, it is understood a number of binary digits (or bits) composing the content of the indication that the resource element is available for sharing emitted by the first device, such bits delimitating the resource element available for sharing within the slot of the first set of allocated radio resources and within a specific number of subchannels for example, such delimitation defining a unique position of the resource element available for sharing.

By at least one bit to indicate a size of the resource element available for sharing, it is understood a number of binary digits (or bits) composing the content of the indication that the resource element is available for sharing emitted by the first device, such bits indicating directly the number of resource elements available for sharing. Such bits may also be common with the bits indicating the position of the resource element available for sharing: based on the exact delimitation of the resource element available for sharing, the size of the resource element may be deduced.

By at least one bit to indicate a time interval during which the resource element is available for sharing, it is understood a number of binary digits (or bits) composing the content of the indication that the resource element is available for sharing emitted by the first device, such bits indicating a time duration of availability of the resource element. Such time interval may be related to the timing of transmission of the first device or the slot composing the first set of allocated radio resources for example.

By at least one bit to indicate a geographical zone associated with the resource element available for sharing, it is understood a number of binary digits (or bits) composing the content of the indication that the resource element is available for sharing emitted by the first device, such bits indicating (or enabling to directly deduce) where the resource element may be used for transmission. Such geographical zone may be related to the resource pool of the first device or the position of the first device and a device receiving transmissions of the first device using the first set of allocated radio resource for example.

According to an aspect of the invention, the resource element is available for sharing in at least one dimension of transmission, said dimension of transmission comprising at least one element among a set of elements comprising:
- a space dimension of transmission,
- a polarization dimension of transmission, and
- a time-frequency dimension of transmission.

Therefore, the first device may propose a potential other device to perform its own transmissions using the resource element made available for sharing in a multiplexing context. By multiplexing, it is referred to a transmission division into series of independent and non-overlapping transmissions using one communication channel.

As a consequence, the first device may increase the number of possibilities for transmissions using multiplexing in various domains (or dimensions of transmission). By using resource multiplexing, several transmissions may be performed in a separate way using a single communication medium (such as a single multiplexed physical channel for example). The spectrum scarcity in the network may be addressed by resource multiplexing, so that a same resource element may be used for several distinct transmissions within each dimension of transmission. Indeed, since the resource pool contains a limited number of slots and subchannels to be allocated to devices for their transmissions, the multiplexing of such resource pool, for example in the space dimension of transmission (or the polarization dimension of transmission) enables to have multiple "copies" of a same time and frequency-related resource, each "copy" of the resource pool RP being usable simultaneously for several distinct transmissions.

By resource element available for sharing in a time and frequency dimension of transmission, it is understood that the resource element is available for sharing as a specific number of OFDM symbols in time and a specific number of resource blocks in frequency and that the transmissions of devices may rely on time and frequency-related radio resources, each transmission being scheduled within a specific slot in time and over specific subchannels in frequency. In the context of New Radio, the resource pool is multiplexed in time and frequency and as a result, the resource element is available for sharing in a time and frequency dimension of transmission.

By a resource element being available for sharing in a polarization dimension of transmission, it is understood that the first device is able to multiplex the radio resources supporting its transmissions(that is, a fixed slot and fixed subchannels) in distinct geometrical orientations of oscillations resulting in distinct geometrical planes of transmission. For example, in the case of a dual polarization multiplexing, the first device may be able to perform transmissions using the same first set of allocated radio resources in a vertical polarization plane and in a horizontal polarization plane, one of the two polarization planes being for example unused by the first device for its own transmissions. The unused polarization plane then refers to the resource element available for sharing by the first device in the unused polarization plane in the polarization dimension of transmission.

By a resource element being available for sharing in a space dimension of transmission, it is understood that the first device is able to perform beamforming and to multiplex the radio resources supporting its transmissions (that is, a fixed slot and fixed subchannels) in distinct spatial directions, at least one direction being unused by the first device for its own transmissions. The resource elements in such unused spatial direction then refers to the resource element available for sharing by the first device in the unused spatial direction in the space dimension of transmission.

According to an aspect of the invention, the first device obtaining an indication of a congestion level within the resource pool, the first device storing furthermore in a first memory unit at least one predefined congestion level threshold, and wherein the primary criterion is met if the congestion level exceeds the congestion level threshold.

Therefore, the first device may propose the sharing of its resource element if the first device determines that there is a spectrum scarcity situation in the network and that the resource pool may potentially lack available radio resources to be allocated to all devices requiring radio resources from such resource pool. As a consequence, by indicating that the resource element is available for sharing in a congested network situation, the first device may enable another device to obtain resource elements to perform its own transmissions despite failing to obtain a set of radio resources allocated to the another device, for example due to a lack of available radio resources in the resource pool (and thus an unsuccessful resource selection procedure for instance).

By obtaining an indication of a congestion level within the resource pool, it is understood that the first device may obtain the value related to the congestion level in the resource pool by receiving such value from the network or from another device. Such value may also be determined by the first device based for example on a measurement, an estimation or a calculation. The indication of the congestion level may for example correspond to the Channel Busy Ratio (or CBR) and/or a level of received signal energy of each subframe of the resource pool. Such indication of a congestion level enables the first device to actually obtain a value reflecting the congestion level in the resource pool (such value may correspond to the indication of the congestion level itself).

By a congestion level threshold, it is understood a maximum value of the congestion level above which the congestion level in the resource pool is considered to reflect a congestion situation. Such congestion level threshold may be predefined for the first device by the network. The first device may also store several congestion level thresholds, which enable the first device to determine several levels of congestion in the resource pool, in order to determine the congestion situation in the resource pool in a more precise way, the congestion level threshold to be compared with the congestion level obtained from the indication of the congestion level being one of the congestion level thresholds stored by the first device.

According to an aspect of the invention, the first device:
- obtaining a physical measurement of a first resource occupation of the first device and,
- determining a value related to a first resource usage of the first device for at least one transmission of first data packets from the first device to at least one first receiving device, and wherein the primary criterion is met if:
- the congestion level exceeds the congestion level threshold, and
- the physical measurement of the first resource occupation of the first device exceeds the value related to the first resource usage of the first device.

Therefore, the first device may propose the sharing of its resource element if the first device determines that it has unused resource elements in the first set of radio resources allocated to the first device and if there is a spectrum scarcity situation in the network, thus requiring the reallocation of the resource element from the first device to another device. This enables the first device to not waste the unused resource element, such resource element being potentially needed by another device for its own transmissions. The sharing of the resource element is thus performed by the first device in a circumstantial and adapted way with respect to the congestion situation in the network but also with respect to the own resource usage of the first device.

By a first resource occupation of the first device, it is understood a size of the first set of radio resources allocated to the first device, that is an amount of radio resources that the first device has at its disposal in order to perform its transmissions.

By a first resource usage, it is understood an amount of radio resources actually used by the first device for its transmissions within a predetermined time (for example the Channel Usage Ratio or CR of the first device). The first resource usage of the first device may take the Quality-of-Service requirements of the first device and the congestion level in the resource pool into account for example, leading to an amount of resource elements which the first device may use to perform its transmissions.

The difference between the first resource occupation and the first resource usage of the first device may reflect a value related to an availability of resource elements to be shared by the first device.

According to an aspect of the invention, the first device using the first set of allocated radio resources to transmit first data packets to at least one first receiving device, the first device being equipped with at least two first polarized antennas and a first radiofrequency chain per first polarized antenna, the first device obtaining a measurement of a cross-polarization ratio on a first device side and on a first receiving device side, the first device storing furthermore a first cross-polarization ratio threshold in a first memory unit,
and wherein the primary criterion is met, and the first device shares the resource element on the polarization dimension of transmission if:
- the congestion level exceeds the congestion level threshold, and
- the measurement of the cross-polarization ratio on the first device side and on the first receiving device side exceeds the first cross-polarization ratio threshold.

As a consequence, the first device may indicate that the resource element is available for sharing in a specific polarization plane (or domain) if the first device determines that:
- the congestion situation in the resource pool requires the sharing of the resource element for potential other devices to use such resource element for their own transmissions, and
- the hardware capabilities of the first device and the channel conditions are favorable for the first device to perform transmissions in the polarization dimension of transmission.

By at least two first polarized antennas and a first radiofrequency chain per first polarized antenna, it is understood two different radio antennas comprised in the first device hardware, the two first polarized antennas and their respective radiofrequency chain (or RF chain) being designed to receive the maximum electromagnetic wave signals in specific polarizations (or polarization plane) different from each other. For example, one of the two first polarized antennas may be able to receive vertically polarized signals whereas the other first polarized antenna may receive horizontally polarized signals. The first device may also have more than two first polarized antennas, each first polarized antenna having a specific and unique polarization and an associated radiofrequency chain. The first device is thus able to transmit signals in different polarization planes using the different first polarized antennas.

By a measurement of the cross-polarization ratio on the first device side and on the first receiving device side, it is understood a ratio between the radio power emitted from the first device to the receiving device in a considered polarization plane (which is the polarization actually used for transmission between the first device and the first receiving device) and the radio power interfering in the orthogonal polarization plane (that is, in the cross polarization plane). Such measurement of the cross polarization ratio may depend on a level of alignment between the polarized antennas of the first device and the first receiving device as well as a height difference between such antennas for example. A first cross-polarization ratio threshold refers to a minimum value of the cross polarization ratio in order for the first device to consider that the channel conditions within the network are favorable for transmissions in a given polarization plane.

According to an aspect of the invention, the first device being equipped with at least one first antenna panel comprising at least two spatially separated antennas,
and wherein the primary criterion is met, and the first device shares the resource element on the space dimension of transmission if the congestion level exceeds the congestion level threshold.

As a consequence, the first device may indicate that the resource element is available for sharing in the space dimension of transmission if the first device determines that:
- the congestion situation in the resource pool requires the sharing of the resource element for potential other devices to use such resource element for their own transmissions, and
- the hardware capabilities of the first device enable the first device to perform beamforming. By at least one first antenna panel comprising at least two spatially separated antennas, it is understood a part of the hardware equipment of the first device enabling the first device to separate different spatial directions in order to perform transmissions in each of such spatial directions, and thus to perform beamforming.

The first device may also take into account that transmissions beamforming notably presents directional constraints leading to transmissions using beamforming being hardly applicable to broadcasts and groupcasts. As a consequence, the primary criterion may be met, and the first device may share the resource element on the space dimension of transmission if the transmissions in the space dimension of the first device are unicast transmissions.

Another aspect of the invention concerns a first device comprising a first processing circuit to perform the method as described through the first aspect of the invention.

Another aspect of the invention concerns a computer program product comprising a first set of program instruction code stored on a first computer-readable medium for the execution of a method according to the first aspect of the invention.

A second aspect of the invention concerns a method implemented by a second device to utilize at least one resource element within a wireless communication network, said resource element belonging to a first set of radio resources reserved for a first device within a resource pool, the first device and the second device using a device-to device communication within the wireless communication network, the method comprising:
- receiving, through the device-to-device communication, an indication that the resource element is available for sharing by the first device, and
- utilizing the resource element shared by the first device for transmission within the wireless communication network, wherein utilizing the resource element is based on a secondary criterion, said secondary criterion being related to at least a data related to a congestion level within the resource pool.

Therefore, the second device may obtain a resource element to support the transmissions of the second device without necessarily obtaining a set of radio resources allocated to the second device, for example by performing a resource selection procedure. The existing resource selection procedure may consist in the second device performing a distributed resource selection procedure in the resource pool by resource sensing methods, enabling the second device to identify available radio resources in a resource pool and proceed to select its radio resources for its own transmissions. The resource selection procedure may also be based on a network scheduling, the network granting a set of allocated radio resources to the second device after a resource request procedure launched by the second device to the network. Thus, by utilizing a resource element made available by the first device through device-to-device communication, the second device may skip the resource selection procedure or the resource request procedure and the method enables to reduce the signaling and the energy used by the second device (and the network in the case of network-scheduled selection procedure) in order to obtain radio resources allocated to the second device.

The method also enables the second device to obtain a resource element in order to perform its own transmissions when the second device does not obtain a set of radio resources allocated to the second device, for example if the resource selection procedure initiated by the second device fails to result in reserved radio resources in the resource pool for the second device. This may be in the case in a situation when the resource pool is congested and there is not enough available radio resources to be allocated to the second device. There may also be other devices requiring radio resources in the resource pool and having stricter Quality of Service (QoS) requirements or a higher priority of transmission compared to the second device, which leads to the available radio resources of the resource pool being allocated in priority to such other devices. The second device may thus lack radio resources to perform its own transmissions and may have to wait to perform another resource selection procedure in the resource pool, which decreases its reliability and increases its latency. As a consequence, the method enables addresses the reliability and performance issues of the wireless communication network.

The invention also enables a direct reallocation of resource elements between devices as an alternative to existing resource allocation schemes. Resource elements which may be unused by the first device may be reallocated and utilized by the second device, which avoids resource waste and enables an adapted and circumstantial radio resource management (RRM) compared to existing RRM schemes.

By a second device, it is understood a vehicular user equipment of the wireless communication network. The second device may be either a mobile device (in the case of a moving vehicle) or a stationary device (in the case of a stopped vehicle for instance). The second device is considered to be equipped with New Radio (NR) Vehicle-to-everything (V2X) technology. The second device is a device different the first device and may also differ from a device receiving transmissions supported by the first set of radio resources from the first device. The second device may or may not have performed a resource selection procedure in order to obtain a set of radio resources allocated to the second device from a resource pool (such resource pool being common or not to the resource pool where the first device obtains its first set of allocated radio resources).

The second device may be equipped with specific hardware such as specific antennas and/or antenna array panels enabling the second device to transmit and receive signals in one or several specific dimensions of transmission such as space or polarization. The second device may be able to perform polarization multiplexing, for example in the vertical and horizontal polarization planes and/or beamforming in specific directions in space.

By receiving, through the device-to-device communication, an indication that the resource element is available for sharing by the first device, it is understood that the second device may receive a message from the first device, for example emitted as a broadcasted, groupcasted or unicasted message, such message indicating that the resource element is available for sharing and including specific information about the resource element. Such indication and the information related to resource element may be encoded as a succession of binary digits forming the indication that the resource element is available for sharing, which may be decodable by the second device using for example a decoding module.

The decoding of the indication that the resource element is available for sharing by the first device may be progressive so that the second device may decode and process each bit or set of bits within the indication before decoding the next bits of the indication. This enables the second device to gain energy and time by not processing the whole indication that the resource element is available for sharing, for example if the first bits decoded by the second device already enables the second device to determine that it cannot or need not to utilize the resource element made available for sharing for example. In such case, the second device may not need to continue decoding the indication received and may ignore the rest of the indication received. Upon receiving the indication that the resource element is available for sharing, the second device may also be able to precisely identify the resource element within the resource pool and takes the availability of such resource element into account, despite for example a resource sensing phase performed by the second device in the resource pool reflecting an unavailability of the resource element (since the resource element is allocated to the first device).

By utilizing the resource element shared by the first device for transmission within the wireless communication network, it is understood that the second device sends its own second data packets to be transmitted to another device receiving such second data packets (such another device being referred to as the second receiving device) using the resource element available for sharing by the first device and indicated by the first device according to the first aspect of the present disclosure.

According to an aspect of the invention, the indication that the resource element is available for sharing by the first device is received within a sharing signaling message though the device-to-device communication.

Utilizing the resource element is based on a secondary criterion, said secondary criterion being related to at least a data related to a congestion level within the resource pool, and said secondary criterion may further be related to one or a combination of the following:
- a pre-configuration message enabling or disabling utilizing the resource element,
- a data related to a channel condition of the wireless communication network,
- a data related to a time interval during which the resource element is available for sharing, such data being received from the first device,
- a data related to a geographical zone associated with the resource element available for sharing, such data being received from the first device,
- a data related to a size of the resource element available for sharing, such data being received from the first device,
- a data related to at least one dimension of transmission of the resource element available for sharing, such data being received from the first device, and
- hardware capabilities of the second device.

As a consequence, the second device, upon receiving the indication that the resource element is available for sharing, may trigger a specific process in order to determine whether the second device needs and/or is able to utilize such resource element. If the secondary criterion is not met, the second device determines that it does not utilize the resource element available for sharing and the second device may ignore the indication emitted by the first device.

Apart from the data received from the first device about the resource element available for sharing, the secondary criterion of the second device may also be related to:
- data related to a time duration during which the second device needs to perform its transmission,
- a data related to a geographical area where the second device is,
- a data related to a second resource usage of the second device, such second resource usage referring to an amount of resource elements needed by the second device to perform its transmission to the second receiving device.

According to an aspect of the invention, the indication that the resource element is available for sharing by the first device including at least a data related to a size of the resource element available for sharing, the second device obtaining:
- a data related to a congestion level within the resource pool,
- a measurement of a second resource usage of the second device for at least one transmission of second data packets from the second device to at least one second receiving device,
   the second device storing furthermore in a second memory unit at least one predefined congestion level threshold,
   and wherein the second device compares the measurement of the second resource usage of the second device with the size of the resource element available for sharing, and the secondary criterion is met if:
      - the congestion level exceeds the congestion level threshold, and
      - the size of the resource element available for sharing by the first device exceeds the measurement of the second resource usage of the second device.

As a consequence, the second device determines that it may need to utilize the resource element available for sharing by the first device if the resource pool is determined by the second device to be in a congestion situation. In the case of a congested resource pool, the second device may be unable to obtain a set of allocated radio resources to be used to support its own transmissions, for example because the resource pool does not have enough available radio resources to be allocated to the second device. The second device may also be competing with other devices in the resource pool which have a higher priority of transmission of stricter Quality-of-Service requirements than the second device, leading to the second device not being allocated radio resources for its transmissions. The second device thus lacks resources to perform its own transmissions, in which case the second device may determine that it needs the resource element available for sharing by the first device.

Moreover, the second device may decide to utilize the resource element if it determines that the size of the resource element available for sharing by the first device is sufficient in order to support the transmissions of the second device.

By a second resource usage, it is understood an amount of resource elements required by the second device to perform its own transmissions to the second receiving device within a given time. Such second resource usage may be determined by the second device and may correspond to the Channel Usage Ratio (or CR) of the second device. The second resource usage of the second device may take the Quality-of-Service requirements of the second device and the congestion level in the resource pool into account for example, leading to an amount of resource elements which the second device may use to perform its transmissions.

According to an aspect of the invention, the resource element available for sharing by the first device being shared at least in a polarization dimension of transmission, the second device transmitting second data packets to at least one second receiving device, the second device being equipped with at least two second polarized antennas and a second radiofrequency chain per second polarized antenna, the second device obtaining a measurement of a cross-polarization ratio on a second device side and on a second receiving device side, the second device storing furthermore a second cross-polarization ratio threshold in the second memory unit,
and wherein the secondary criterion is met, and the second device utilizes the resource element available for sharing by the first device on the polarization dimension of transmission if:
- the congestion level exceeds the congestion level threshold, and
- the size of the resource element available for sharing by the first device exceeds the measurement of the second resource usage of the second device, and
- the measurement of the cross-polarization ratio on the second device side and on the second receiving device side exceeds the second cross-polarization ratio threshold.

As a consequence, the second device may utilize the resource element made available for sharing by the first device in the polarization dimension of transmission if the second device determines that:
- the congestion situation in the resource pool requires the second device to potentially need the resource element to support its own transmissions,
- the size of the resource element available for sharing by the first device is sufficient in order to support the transmissions of the second device, and
- the hardware capabilities of the second device and the channel conditions are favorable for the second device to perform transmissions in the polarization dimension of transmission and according to the polarization plane proposed by the first device.

According to an aspect of the invention, the resource element available for sharing by the first device being shared at least in a space dimension of transmission, the second device being equipped with at least one second antenna panel comprising at least two spatially separated antennas,
and wherein the secondary criterion is met, and the second device utilizes the resource element available for sharing by the first device on the space dimension of transmission if:
- the congestion level exceeds the congestion level threshold, and
- the size of the resource element available for sharing by the first device exceeds the measurement of the second resource usage of the second device.

As a consequence, the second device may utilize the resource element made available for sharing by the first device in the space dimension of transmission if the second device determines that:
- the congestion situation in the resource pool requires the sharing of the resource element for potential other devices to use such resource element for their own transmissions, and
- the hardware capabilities of the second device enable the second device to perform beamforming in the same direction as the one proposed by the first device in the indication.

The first device may also take into account that transmissions beamforming notably presents directional constraints leading to transmissions using beamforming being hardly applicable to broadcasts and groupcasts. As a consequence, the secondary criterion may be met, and the second device may utilize the resource element shared by the first device on the space dimension of transmission if the transmissions in the space dimension of the second device are unicast transmissions.

According to an aspect of the invention, the second device, if the secondary criterion is met, transmits second data packets to at least a second receiving device using the resource element available for sharing by the first device.

As a consequence, once the second device determines that it will utilize the resource element available for sharing by the first device, the second device transmits its data packets to the second receiving device on the dedicated part of the first set of allocated radio resources corresponding to the resource element shared by the first device.

The second device may also emit a control signaling containing a control information of the second device ahead of its data transmissions on a specific feedback channel of the network such as the Physical Sidelink Feedback Channel (PSFCH) in New Radio, so as to inform other devices that the second devices will utilize the resource element made available by the first device.

Another aspect of the invention concerns a second device comprising a second processing circuit to perform the method as described through the second aspect of the invention. Another aspect of the invention concerns a computer program product comprising a second set of program instruction code stored on a second computer-readable medium for the execution of a method according to the second aspect of the invention.

Other features, details and advantages will be shown in the following detailed description and on the figures, not in a limitative way, on which:
- [Fig. 1] shows a part of a general wireless communication network where an embodiment of a method according to the invention can be applied.
- [Fig. 2] shows an existing resource allocation procedure in a general wireless communication network.
- [Fig. 3] shows a signaling of a first device according to a possible embodiment of the invention.
- [Fig. 4] is a flowchart showing steps implemented by a first device according to a possible embodiment of the invention.
- [Fig. 5] is a flowchart showing steps implemented by a second device according to a possible embodiment of the invention.
- [Fig. 6] is a flowchart showing steps implemented by a first device according to a possible embodiment of the invention.
- [Fig. 7] is a flowchart showing steps implemented by a second device according to a possible embodiment of the invention.
- [Fig. 8] shows a resource sharing on a polarization dimension of transmission according to a possible embodiment of the invention.
- [Fig. 9] shows a resource sharing on a space dimension of transmission according to a possible embodiment of the invention.
- [Fig. 10] shows a resource sharing on a time-frequency dimension of transmission according to a possible embodiment of the invention.
- [Fig. 11] shows a schematic processing circuit of a device.

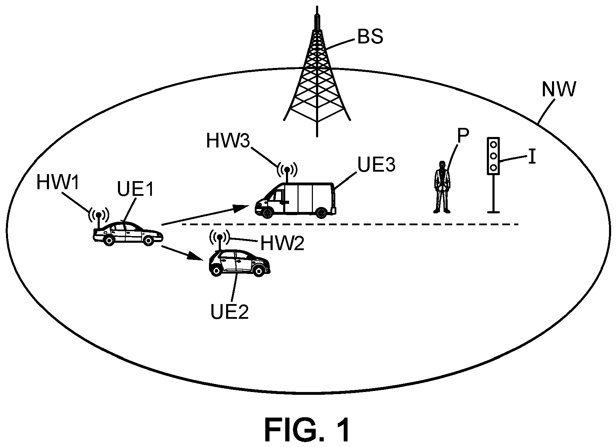

It is now referred to Figure 1. There is shown part of a general wireless communication network NW. Such a wireless communication network NW includes different units including a base station BS, a pedestrian P, a roadside infrastructure I and several vehicular user equipment (or V-UEs) UE1, UE2, UE3. In another embodiment, the wireless communication network NW may include several base stations BS and different numbers of units overall.

Such units altogether form a Cooperative Intelligent Transport System (C-ITS) within the wireless communication network NW, which consists in such units being equipped with a given digital technology and communicating with each other in order to provide each other with information in the context of road safety and traffic efficiency.

A vehicular user equipment UE1, UE2, UE3 in such a network NW is enabled with a vehicular communication system referred to as Vehicle-to-everything (V2X) communication, which indicates all types of communications between a vehicular user equipment UE1, UE2, UE3 and any unit which may affect or be affected by the vehicular user equipment UE1, UE2, UE3. A given vehicular user equipment UE1 can thus interact with another vehicular user equipment UE2, UE3 through Vehicle-to-Vehicle (V2V) communication, a network entity such as a base station BS through Vehicle-to-Network (V2N) communication, a cellular user equipment of a pedestrian P through Vehicle-to-Pedestrian (V2P) communication or a roadside infrastructure I such as a smart traffic light through Vehicle-to-Infrastructure (V2I) communication.

In particular, the communication between a vehicular user equipment UE1 and another vehicular user equipment - such as another vehicular user equipment UE2 (corresponding to V2V) or a pedestrian mobile device (corresponding to V2P) for instance - is referred to as direct communication, also called Sidelink (SL) or Device-to-Device communication (D2D), since both communication endpoints are user equipment (UEs). Direct communications use an interface called the PC5 interface corresponding to the direct channel between two user equipment (UEs) of the network NW. Contrarily to cellular network-based communications, direct communications between UEs over PC5 do not require signal relay through a base station BS.

In the context of the present description, direct communications (or D2D) between two vehicular user equipment (V-UEs) over PC5 in NR V2X as defined by the 3^{rd} Generation Partnership Project (3GPP) will be considered. As a consequence, the terms vehicular user equipment, device, vehicular device or vehicle may be used interchangeably throughout the present description.

The Figure 1 shows such devices UE1, UE2, UE3. All devices UE1, UE2, UE3 are considered to have NR V2X capabilities and are able to perform direct communications with each other using the PC5 interface. For instance, the full arrows on Figure 1 represent the PC5 interface between a first device UE1 on the one hand and a second device UE2 and a third device UE3 on the other hand. Over PC5, the first device UE1 can thus transmit dedicated control and data signaling to the second device UE2 or the third device UE3 through unicast transmissions for instance. The first device UE1 can also transmit control and data signaling through broadcast and/or groupcast transmissions which can be received by any other device UE2, UE3, providing some geographic, channel and hardware conditions which will not be detailed here.

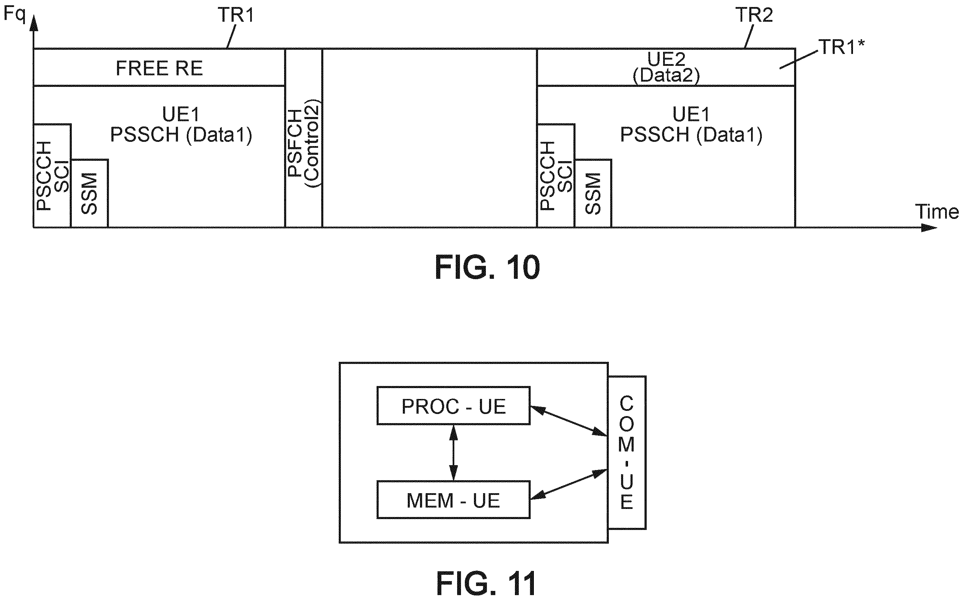

Each device UE1, UE2, UE3 comprises a distinct processing circuit as illustrated by Figure 11. Such processing circuit comprises a processing unit (PROC-UE), a memory unit (MEM-UE) and a communication unit (COM-UE) so that devices UE1, UE2, UE3 are able to transmit, store and process data and control signaling in the context of the present description. The processing circuit of each device UE1, UE2, UE3 may be configured to execute a common or different computer program routines (one for sharing resource and one for taking the shared resource for example).

In such a V2X radio interface framework, a key design aspect is the radio resource management (RRM) based on which devices UE1, UE2, UE3 perform data and control transmissions.

For NR sidelink transmissions, two modes of radio resource management exist:
- the NR V2X sidelink Mode 1, which is a network scheduled NR RRM mode, also referred to as a centralized RRM mode. In the NR V2X sidelink Mode 1, the radio resources of devices UE1, UE2, UE3 are scheduled by a base station BS of the network. Devices UE1, UE2, UE3 must be in-coverage of the base station BS and exchange downlink (DL) and uplink (UL) signals with the base station BS in order to be granted allocated radio resources for their transmissions. Such a centralized RRM mode is adopted by in-coverage devices UE1, UE2, UE3.
- the NR V2X sidelink Mode 2, which is an autonomous NR RRM mode, also referred to as a distributed RRM mode. In the NR V2X sidelink Mode 2, devices UE1, UE2, UE3 select radio resources for their transmissions by themselves, without the need of any network entity (that is, a base station BS for instance). To that end, devices UE1, UE2, UE3 launch a resource selection procedure in a resource pool RP based on a channel sensing mechanism which will be detailed further in the description. Such a distributed RRM mode can be adopted by both in-coverage and out-of-coverage devices UE1, UE2, UE3.

In the context of the present description, devices UE1, UE2, UE3 may be considered to launch either the NR V2X sidelink Mode 1 resource allocation procedure or the NR V2X sidelink Mode 2 resource allocation procedure. The devices UE1, UE2, UE3 may also launch any other resource allocation procedure leading to allocated radio resources for devices UE1, UE2, UE3.

In both modes 1 and 2 of resource allocation, devices UE1, UE2, UE3 may obtain allocated radio resources for their own control and data transmissions.

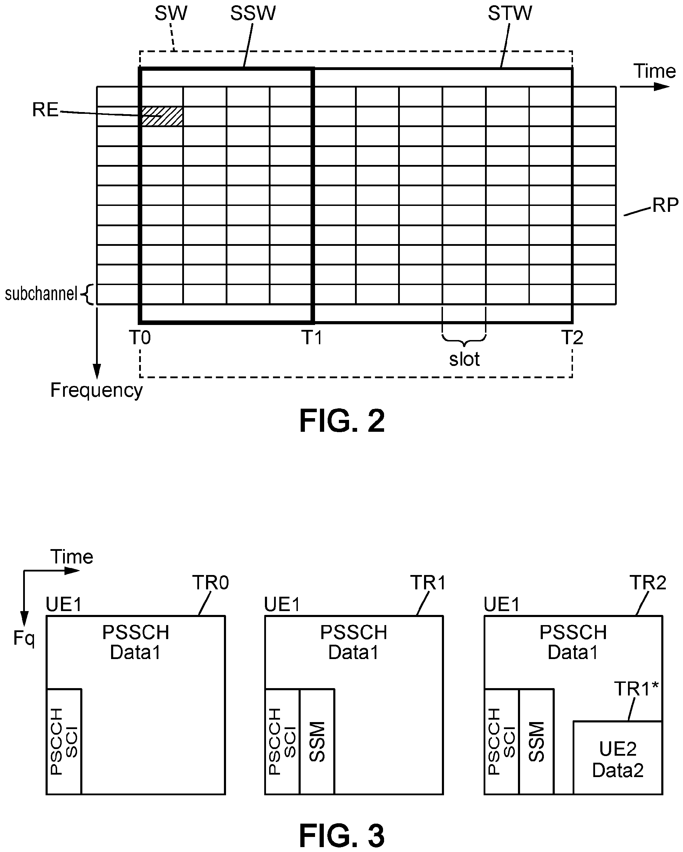

In the context of NR V2X, each device UE1, UE2, UE3 has allocated radio resources which are multiplexed both in time and frequency. However, depending on the hardware capabilities HW1, HW2, HW3 of each device UE1, UE2, UE3, radio resource management (RRM) can be exploited in different polarizations, space domains etc., and thus be multiplexed in polarization, space etc., resulting in wide possibilities for devices UE1, UE2, UE3 in terms of spectral efficiency. An architecture of a resource pool and the different types of resource multiplexing will be detailed in the description of Figure 2.

The hardware capabilities HW1, HW2, HW3 of devices UE1, UE2, UE3 can correspond to:
- an array of antennas and/or directed antennas presenting at least two different directions, so that a device UE1, UE2, UE3 equipped with an array of N_{B} antennas is able to perform beamforming and thus separate N_{B} different beams (and thus N_{B} different directions) in the space dimension of transmission. A device UE1, UE2, UE3 enabled with an array of differently directed antennas is thus able to perform a spatial multiplexing.
- at least two differently polarized antennas and a radiofrequency chain (or RF chain) per polarized antenna, so that a device UE1, UE2, UE3 equipped with at least dual polarized antennas and their respective RF chains is able to separate at least the vertical and horizontal polarizations in the polarization dimension of transmission.

Such hardware HW capabilities (array of directed antennas, polarized antennas...) may be combined within one device UE1, UE2, UE3, so that a device UE1, UE2, UE3 is able to perform resource multiplexing in different domains. Spatial multiplexing, polarization multiplexing... may also depend on other factors than hardware capabilities HW of the devices UE1, UE2, UE3 such as channel conditions of the wireless communication network NW for instance.

It is now referred to Figure 2. Figure 2 shows a representation of a resource pool RP as considered in 3GPP NR V2X architecture. In the context of the present description, the considered resource pool RP is a resource pool for sidelink transmissions in the context of NR V2X. Radio resources in the resource pool RP are to be shared between devices UE1, UE2, UE3 for sidelink transmissions and are supported by different physical channels including:
- a Physical Sidelink Shared Channel (PSSCH), which carries transport blocks (TBs) for data transmission of devices UE1, UE2, UE3, and
- a Physical Sidelink Control Channel (PSCCH), which carries a part of a Sidelink Control Information for control transmission of devices UE1, UE2, UE3.

In 3GPP NR V2X, the resource pool RP - and thus the PSSCH and the PSCCH - is multiplexed both in time and frequency domains.

In the time domain represented on the horizontal axis on Figure 2, radio resources of the resource pool RP are structured in different slots, each slot containing 14 OFDM (Orthogonal frequency-division multiplexing) symbols, which are not represented on Figure 2. A subframe is defined as one or many slots and has a fixed duration of 1 millisecond (ms). A particularity of the NR V2X resource pool RP is that the duration of a slot is variable depending on the duration of one OFDM symbol, which depends itself on a variable subcarrier spacing (SCS) value in frequency. In NR sidelink, for the first frequency range (FR1), the subcarrier spacing (SCS) can adopt three different values: 15 kilohertz (kHz), 30 kHz or 60 kHz. In the case of a SCS equaling 15 kHz, a corresponding slot will approximately correspond to a subframe, and thus has a duration of 1 ms. For higher values of the SCS with respect to 15 kHz, the duration of a slot will be less than 1 ms.

A time length of the resource pool RP refers to a time length during which a vehicular device UE1, UE2, UE3 of the wireless communication network NW has access to the resources of the resource pool RP, for instance when the device UE1, UE2, UE3 launches an autonomous resource selection procedure to reserve radio resources for its own transmissions. In NR V2X Mode 2, the time length during which a device UE1, UE2, UE3 may select radio resources from the resource pool RP corresponds to 32 slots. One can thus define a selection and transmission window STW within the resource pool RP for each device UE1, UE2, UE3 launching an autonomous resource selection procedure. The time length of such selection and transmission window STW is thus 32 slots.

In the frequency domain, represented on the vertical axis on Figure 2, radio resources of the resource pool RP are structured in different subchannels, one subchannel containing at least 10 Resource Blocks (RB). That is, a maximum size of the selection and transmission window STW is 32 slots in the time domain and is bandwidth-dependent in the frequency domain.

A radio resource refers to a time-frequency block composed by one slot in the time domain and one or several subchannel(s) in the frequency domain.

A resource element RE refers to a time-frequency block composed by one OFDM symbol in the time domain and one resource block (or RB) in the frequency domain. A resource element is thus a smaller resource unit compared to a radio resource and as a matter of fact, a radio resource is composed by several resource elements.

Referring to figure 2, it is represented several resource elements RE forming a radio resource composed by one slot and one subchannel in the resource pool. By a size or an amount of resource elements RE, it is referred to the number of OFDM symbols and the number of resource blocks composing such resource elements RE.

A device UE1, UE2, UE3 may be allocated radio resources from the resource pool RP. That is, the smallest unit allocated to a device UE1, UE2, UE3 is a single radio resource composed by one slot and one subchannel. (in particular, a device UE1, UE2, UE3 cannot be allocated a single resource element RE from the resource pool RP for instance). Moreover, in the case of a distributed RRM mode (such as NR V2X mode 2), the radio resources of the resource pool RP which can be selected by a device UE1, UE2, UE3 for its transmissions are delimited within a size-limited selection and transmission window STW (that is, limited to 32 slots and bandwidth-dependent subchannels).

Referring to figure 2, it is considered a distributed RRM mode within the NR V2X context. A device UE1 thus launches an autonomous resource selection procedure in the resource pool RP in order to obtain a first set of allocated radio resources from the resource pool RP. Within a resource pool window SW of the resource pool RP, the device UE1 launches an autonomous resource selection procedure consisting of three different steps, represented on Figure 2 between times T0 and T2:
- the first step is a resource sensing phase launched in a sensing window SSW, between times T0 and T1, such sensing window SSW being included in the resource pool window SW. The first step enables the device UE1 to identify available resources from radio resources already allocated to other vehicular devices, so as to identify potential candidates for resource selection by the device UE1. To that end, the device UE1 implements a sensing-based scheme enabling the device UE1 to detect a part of a Sidelink Control Information (SCI) conveyed by the PSCCH part on each radio resource. Radio resources which are occupied by other devices include information about their unavailability in the part of SCI (or first-stage SCI) launched by the corresponding devices and decodable by the device UE1 during the sensing phase. During this first step, the device UE1 also measures the Reference Signal Received Power (RSRP) of each radio resource in order to identify radio resources with an acceptable interference level to the device UE1. An acceptable interference level refers to an interference level not exceeding an interference level threshold, such threshold depending for instance on the Quality of Service (QoS) of the device UE1. At the end of the first step, the device UE1 obtains a full map of the resource pool RP identifying the free resources, the occupied resources as well as the interference level of each resource to the device UE1. Candidate radio resources for the device UE1 correspond to the free resources. In another embodiment, candidate resources may also include resources occupied by ongoing sidelink transmissions of other devices but with an interference level to the device UE1 below a given interference level threshold.
- the second step is a resource selection phase, at time T1. The resources to be allocated to the device UE1 in time (that is, one slot) and frequency (that is, one or several subchannels) for its transmissions are randomly selected among the candidate resources previously identified in the first step. By the end of step 2, the device UE1 has a set of allocated radio resources for its transmissions.
- the third step is the data transmission using the set of allocated radio resources, between T1 and T2. The selection phase and the transmission phase may also be launched one after another between times T1 and T2 in the selection and transmission window STW, such selection and transmission window STW being included in the resource pool window SW. After obtaining the set of allocated radio resources for its transmissions, the device UE1 assigns its data packets to the PSSCH part of such allocated radio resources. The device UE1 also prepares the SCI related to the set of allocated radio resources and eventually transmits a part of such SCI (or first-stage SCI) which informs the other devices about its reserved radio resources on the PSCCH part of the set of allocated radio resources.

The autonomous resource selection procedure is launched by the device UE1 in the resource pool RP. In particular, such resource pool RP is preconfigured by the network (for example by the base station BS) in a predefined geographical area, for instance in an area where some devices may be out-of-coverage of the network and still manage to obtain allocated radio resources by launching an autonomous resource selection procedure. The radio resources from such resource pool RP may be allocated to devices within such geographical area.

The device UE1 may also obtain its set of allocated radio resources via a scheduling by the network, based on the centralized RRM mode such as NR V2X mode 1. In such centralized RRM mode, the device UE1 performs a four-step exchange procedure to request radio resources to be scheduled by the base station BS The base station BS, based for example on the available radio resources in the resource pool within a given time interval (for example within the time length of the selection and transmission window STW), grants a set of allocated radio resources to the device using a Physical Downlink Control Channel (PDCCH). Such resource grant may be performed in either a dynamic (the device requests radio resources from the network when the device has transmissions to perform) or configured way (the device requests radio resources prior beforehand and obtains allocated resources in a configured periodicity). The device UE1 then transmits its PSCCH and PSSCH containing its control and data transmission using the allocated radio resources granted by the network.

The possibility for the device UE1 to obtain allocated radio resources for its transmissions notably depends on the presence of available radio resources which may be selected within the time-limited selection and transmission window STW of the resource pool RP. As a consequence, the resource selection procedure (either autonomous as precedingly detailed or network-scheduled) does not always lead to a set of allocated radio resources ensuring the full transmissions of each device requiring radio resources in the same selection and transmission window STW. This is particularly the case when the resource pool RP is congested. Such congestion of the resource pool RP occurs for instance if many devices UE 1, UE2, UE3 launch an autonomous resource selection procedure or request radio resources within the same selection and transmission window STW, leading to many devices competing for the same limited amount of radio resources within the resource pool RP. Congestion may also occur in the resource pool RP if some devices have tight constraints or strict requirements regarding Quality of Service (QoS) which require them to use multiple radio resources for a single transmission. Such high-QoS devices are thus particularly resource-hungry and need important sets of allocated radio resources.

When a resource pool RP is highly congested, many devices UE1, UE2, UE3 potentially lack radio resources to support their own transmissions while assuring an optimized reliability and latency, notably due to existing congestion control methods. Such existing congestion control methods consist for instance in data packet dropping, pre-emption mechanisms by low-priority devices in favor of high-priority devices. Most existing congestion control methods thus curb the reliability of device transmissions and thus the overall performance of the V2X application.

In order to address the congestion issue and solve the spectrum scarcity problem in the resource pool RP, alternative transmissions using multiplexing in various domains (or dimensions of transmission) exist. Indeed, the resource pool RP as represented on Figure 2 have radio resources multiplexed in both time and frequency domains. Such resource pool RP thus offers a limited number of slots and subchannels to be allocated to devices for their own sidelink transmissions. However, multiplexing such resource pool RP in other dimension(s) than time and frequency (space, polarization, etc.) enables to have multiple "copies" of the same time-frequency resources, each "copy" of the resource pool RP being usable by multiple devices UE1, UE2, UE3 in a simultaneous way.

Multiplexing refers to a transmission division into series of independent and non-overlapping transmissions using one communication channel. For example, in the case of frequency division multiplexing or Orthogonal Frequency Division Multiplexing (OFDM), a total bandwidth using a communication medium is divided into non-overlapping frequency bands, each band being used to carry a separate signal.

In the case of spatial multiplexing, a device having specific hardware capabilities such as different directed antennas, is able to perform beamforming so as to send on the same resource pool RP multiple transmissions in different spatial directions over different beams. As a consequence, the spectrum resources are increased by a factor N_{B} where N_{B} is the number of beams deployable by the device.

In some embodiments, optimized spatial multiplexing requires particular channel conditions such as a Line-of-Sight-dominated environment, in order to avoid crosstalk interference between different beams. Spatial multiplexing also present directional constraints by definition and is thus limited to specific communication scenarios such as unicast transmissions (that is, spatially directed ones, contrarily to broadcast or groupcast transmissions).

In the case of polarization multiplexing, a device having specific hardware capabilities such as different polarized antennas presenting different polarization planes (horizontal H and vertical V polarization planes for instance) is able to perform polarization division multiplexing (PDM) so as to transmit resources from a same resource pool RP multiple times in different polarizations, any dual polarizations forming orthogonal pairs. As a consequence, the spectrum resources are increased by a factor N_{P} where N_{P} is the number of available polarizations.

Polarization multiplexing also requires an optimized orthogonality between different polarizations, so as to ensure a sufficient isolation between different polarizations. Measurable indicators such as the cross-polarization ratio (XPR) which measures the cross-polarization radiation between two polarizations enable to determine whether channel conditions are met or not in order to perform polarization multiplexing.

Such alternative transmissions using multiplexing in the space or polarization dimensions of transmission will be detailed further in the description. In the context of the present description, devices UE1, UE2, UE3 may be enabled with specific hardware capabilities HW1, HW2, HW3 so as to be able to perform multiplexing in different dimensions of transmission (such as space or polarization). Such specific hardware capabilities HW1, HW2, HW3 will be detailed if needs be.

It is now referred to Figure 3. The Figure 3 represents three different data and control sidelink transmissions of a first device UE1 within the wireless communication network NW. The transmissions are represented on Figure 3 in the time domain horizontally and in the frequency domain vertically. Such sidelink transmission is performed from the first device UE1 to a first receiving device. A first receiving device of the first device UE1 refers to another device of the network NW receiving the transmissions performed by the first device UE1 using the first set of allocated radio resources. In NR V2X, the Physical Sidelink Control Channel (PSCCH) and the Physical Sidelink Shared Channel (PSSCH) supporting sidelink transmissions are multiplexed in both time and frequency. Indeed, in addition to a part of the PSSCH and the corresponding PSCCH being transmitted using overlapping time resources in non-overlapping frequency resources, another part of the PSSCH and its corresponding PSCCH are transmitted using non-overlapping time resources. Figure 3 thus illustrates such a time and frequency-multiplexing of both the PSSCH and the PSCCH in the transmissions of the first device UE1. Such transmissions are performed using a first set of allocated radio resources which is allocated to the first device UE1. The first device UE1 obtains such first set of allocated radio resources at a time prior to performing the transmissions represented on figure 3, either by launching an autonomous resource selection procedure as detailed in figure 2 or by a network-scheduled procedure.

The sidelink transmission represented on the far-left part of Figure 3 corresponds to the existing representation of a vehicle UE1 initial transmission TR0 in the NR V2X. As described in Figure 2, the first device UE1, after obtaining its first set of allocated radio resources, assigns its data packets Data1 on a PSSCH part of its first set of allocated radio resources while assigning a first-stage Sidelink Control Information (SCI) SCI on a PSCCH part of its first set of allocated radio resources. The PSSCH part of the transmission TR0 thus corresponds to the data transmission Data1 of the first device UE1 while the PSCCH part of the transmission TR0 corresponds to the control transmission of the first device UE1.

The sidelink transmission TR1 represented on the middle part of Figure 3 corresponds to an initial transmission TR1 of the first device UE1 to the first receiving device in the NR V2X when the first device UE1 shares one or several resource elements available for sharing from its first set of allocated radio resources in an embodiment of the invention. The conditions upon which the first device UE1 may share such resource element are referred to as primary criteria and will be detailed further in the description. The resource element to be shared by the first device UE1 is part of the first set of allocated radio resources.

In the context of the present description, the first device UE1 may share an amount of resource elements corresponding to one or several resource elements from its first set of allocated radio resources. The terms "resource elements available for sharing", "resource element(s) available for sharing" and "resource element available for sharing" all refer to the amount of resource elements shared by the first device UE1.

The sharing of such resource elements consists in the first device UE1 emitting an indication that the resource elements are available for sharing. Such indication may consist in a message re-allocating the resource elements available for sharing to at least one identified second device UE2 by transmitting such indication to the second device UE2 through sidelink (or device-to-device) communication.

The first device UE1 may also announce the availability of the resource elements available for sharing by the emission of a specific signaling via a sharing signaling message SSM, which is an additional control signaling message within its initial transmission TR1, such sharing signaling message SSM including the indication of the first device UE1 that resource elements are available for sharing. Such sharing signaling message SSM is carried on the PSSCH part using the first set of allocated radio resources. As a consequence, if the first device UE1 decides to share resource elements of its first set of allocated radio resources, its initial transmission TR1 may include:
- the existing SCI launched by the first device UE1 and embedded in the PSCCH part of the first set of allocated radio resources,
- the data packets Data1 to be transmitted by the first device UE1 to the first receiving device using the first set of allocated radio resources, such data packets Data1 being embedded in the PSSCH part of the first set of allocated radio resources, and
- an additional control signaling message which is a sharing signaling message SSM, embedded in the PSSCH part of the first set of allocated radio resources.

As a consequence, in order to announce the sharing of resource elements, the initial transmission TR1 of the first device UE1 may add a control signaling message SSM in comparison to the existing initial transmission TR0 in order to transmit data Data1 as well as two distinct control signaling messages (that is, the existing SCI and the sharing signaling message SSM). In particular, the content of the existing initial transmission TR0 remains the same, the sharing signaling message SSM being only added in the PSSCH part, so as to form the initial transmission TR1 of the first device UE1. As a consequence, the SCI embedded in the PSCCH part is unchanged and still decodable by other devices so that the resource sensing phase of the existing resource selection procedure remains performable in the case of other devices launching an autonomous resource selection procedure for example. The sharing signaling message may then be decoded by devices which are enabled with a particular resources-sharing hardware, software and/or feature in the context of the present description for instance. The decorrelation between the existing SCI and the sharing signaling message SSM thus enables a backward compatibility between the resource sharing procedure and the existing NR V2X resource selection methods for instance.

The indication that resource elements are available for sharing by the first device UE1 may be embedded in the sharing signaling message SSM and composed of a succession of binary digits (or bits) coded by the first device UE1, which content depends on the characteristics of the resource elements available for sharing.

In one embodiment, such indication that resource elements are available for sharing transmitted by the first device UE1 (for example as a sharing signaling message SSM) may include:
- one bit to effectively indicate if resource elements are available for sharing or not. For instance, the first bit of the sharing signaling message SSM decodable by a second device UE2 receiving the sharing signaling message SSM is a bit indicating "0" if there is no resource element to be shared or "1" if there is a resource element available for sharing. In this embodiment, a sharing signaling message SSM may for instance be emitted by default as an automatic signaling by the first device UE1 after obtaining its first set of allocated radio resources (that is, the step of sending a sharing signaling message SSM is embedded within the first device UE1 software), even when the first device UE1 has no resource element to share (the bit thus indicating "0"). The lecture of this bit indicating that a resource element is shared may serve to trigger a specific sharing decision procedure by the other devices UE2, UE3 receiving the sharing signaling message SSM, in order to decide either they will use the shared resource element or not. Such specific sharing decision procedure launched by other devices UE2, UE3 when receiving a sharing signaling message SSM will be detailed further in the description. Alternatively, there may be no bit indicating the sharing of a resource element by the first device UE1, the reception of the indication that resources elements are available for sharing itself being a sufficient trigger to announce the availability of the shared resource element (that is, no sharing signaling message SSM is emitted by the first device UE1 if there is no available resource element).
- one or several bits to indicate the dimension of transmission (or domain) of the resource elements available for sharing by the first device UE1. Indeed, the first device UE1 may share its resource elements in the time-frequency domains, but also in a polarization and/or space domain for instance. One or several bits contained in the sharing signaling message SSM may thus relate to the dimension of transmission within which the resource elements available for sharing by the first device are available. For instance, two bits of the sharing signaling message SSM can indicate such domain: the bits "00" indicating a resource sharing in the time-frequency domains, the bits "01" a resource sharing in the polarization domain, the bits "10" a resource sharing in the space domain... More bits can be allocated in order to indicate a sharing in other dimensions of transmission as well. Such bits indicating the dimension of transmission of the resource elements available for sharing may also guide other devices receiving the sharing signaling message SSM in their decision to utilize the resource elements available for sharing or not. If a second device UE2, being unable to perform polarization multiplexing (due to a lack of hardware capabilities HW2 for instance), receives the sharing signaling message SSM and decodes the bits "01" indicating that resource elements are available for sharing by the first device UE1 in the polarization domain, the second device UE2 will not need to process and decode the sharing signaling message SSM any further since it is unable to utilize such resource elements. In another embodiment, the dimension of transmission can be directly preset within the first device UE1 software, for instance when the first device UE1 exclusively shares the resource elements in the polarization domain. In such case, no bits are necessarily required to indicate the dimension of transmission of the resource elements available for sharing in the sharing signaling message.
- at least one bit to indicate a time-related information about the resource elements available for sharing, such as a maximum time before which the resource elements should be utilized or a time interval during which the resource elements may be utilized. Such time-related information may be based on a specific time slot or slot duration of the first set of allocated radio resources or on a time or pattern of transmission of the first device UE1 for example.
- at least one bit to indicate a geographically-related information about the resource elements available for sharing, such as a geographic zone associated with the resource elements available for sharing or associated with the resource pool.
- one or several bits to indicate the size of the resource elements to be shared by the first device UE1. Such bits aim at detailing the content of the resource elements available for sharing by the first device UE1 to other devices UE2, UE3. In this context, the size of the resource elements available for sharing may be indicated by providing the starting and end positions of the resource elements available for sharing within the resource pool RP in the time and frequency domains. For instance, if the resource elements available for sharing extend within a given number of OFDM symbols in the time domain and a given number of resource blocks in the frequency domain of the resource pool RP, then:
   - log₂(N_{symbols}) bits can be contained in the sharing signaling message SSM to indicate the starting position of the shared resource element in the time domain, where N_{symbols} represents the total number of OFDM symbols within a specific time slot; and
   - log₂(N_{symbols}) bits can be contained in the sharing signaling message SSM to indicate the end position of the resource elements available for sharing in the time domain;
   - log₂(N_{RB}) bits can be contained in the sharing signaling message SSM to indicate the starting position of the shared resource element in the frequency domain, where N_{RB} represents the total number of resource blocks within the allocated radio resources.
   - log₂(N_{RB}) bits can be contained in the sharing signaling message SSM to indicate the end position of the shared resource elements in the frequency domain.

With the same reasoning, if the resource elements are available for sharing by the first device UE1 in the polarization domain, log₂(N_{P}) bits may be contained in the sharing signaling message SSM to indicate the polarization concerned by the sharing, where N_{P} represents the number of polarizations within the network NW. If the resource elements are available for sharing by the first device UE1 in the space domain, log₂(N_{B}) bits may be contained in the sharing signaling message SSM to indicate the spatial direction concerned by the sharing, where N_{B} represents the number of beams or spatial directions within the network NW.

The bits embedded within the sharing signaling message SSM mainly aim at precising the exact characteristics of the resource elements made available by the first device UE1 such as its nature, size, position, available duration etc., so that other devices UE2, UE3 receiving the sharing signaling message SSM from the first device UE1 may be able to precisely identify the available resource elements, notably in order for them to determine either they may have the need and/or the capability to use the resource elements available for sharing.

The sidelink transmission TR2 represented on the far-right part of Figure 3 corresponds to a second transmission TR2 of the first device UE1 in the NR V2X when the resource elements available for sharing are utilized by a second device UE of the network NW. The process launched by the second device UE2 leading to the utilize of the resource elements made available for sharing by the first device UE1 will be detailed further. When a device - the second device UE2 for instance - different from the first device UE1 utilizes the resource elements available for sharing by the first device UE1, the first device UE1 and the second device UE2 are paired so that the first set of allocated radio resources covers the data and control transmissions of both the first device UE1 and the second device UE2, the control and data transmissions Data2 of the second device UE2 being supported by the PSSCH part of the first set of allocated radio resources corresponding to the resource elements available for sharing. The transmission TR2 represented on the far-right part of Figure 3 includes the second transmission of the first device UE1 (the first transmission, or initial transmission TR1 being the transmission containing the sharing signaling message SSM emitted to other devices UE2, UE3) and also the initial transmission TR1* of the second device UE2 (considering here that the second device UE2 did not perform transmissions prior to transmission TR1*).

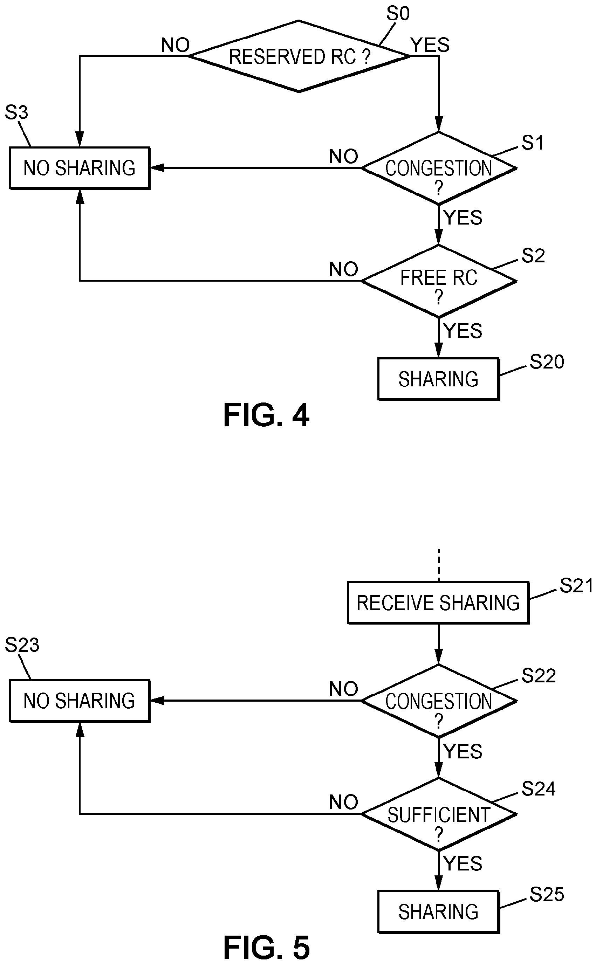

It is now referred to Figure 4. Figure 4 is a flowchart representing steps of a first resource sharing process performed by a first device UE1 of the wireless communication network NW.

The first resource sharing process can only be performed if the first device UE1 actually has allocated radio resources. Thus, at step S0, if the first device UE1 has not yet selected a first set of allocated radio resources for its own transmissions (that is, it has not launched a complete resource selection procedure or obtained a resource grant by the network), the first device UE1 cannot share any resource element to any other devices UE2, UE3 and the first resource sharing process ends at step S3. In this case, no indication that resource elements are available for sharing and thus no sharing signaling message SSM is emitted by the first device UE1. Alternatively, the first device UE1 may still send a sharing signaling message SSM with a bit indicating the availability of a resource element to be shared set at "0", meaning that no resource element is shared by the first device UE1. Yet, if at step S0, the first device UE1 has obtained a first set of allocated radio resources for its own transmissions (either through the autonomous or network-scheduled resource selection procedure), step S 1 of the first resource sharing process may be launched by the first device UE1. At step S1, the first device UE1 evaluates a congestion level within the resource pool RP in order to evaluate whether a first resource sharing process is necessary. To that end, the first device UE1 is able to obtain an indication about the congestion level in the resource pool RP such as a Channel Busy Ratio (CBR) for each subframe of the resource pool RP by obtaining a value of a Received Signal Strength Indication (RSSI) of each subframe within a given time, for instance for the 100 last subframes of the resource pool RP. Such indication about the congestion level in the resource pool RP may be measured by the first device UE1 or may be received by the first device UE1 from another unit of the network NW, for example another device or the base station BS. The value of the RSSI enables the first device UE1 to quantify how requested the resource pool RP is by devices of the network NW. Therefore, the CBR gives a metric reflecting the recent congestion level within the resource pool RP. The first device UE1 may also store one or different congestion level thresholds which are compared with the CBR in the resource pool RP. For example, if the CBR is below 0,650 then it is considered that the resource pool RP is not congested. As a consequence, at step S1, if the measured CBR is below the congestion level threshold, the first device UE1 evaluates that the resource pool RP is not congested and there is thus no need to perform the first resource sharing process, since the resource pool RP is considered to have enough available radio resources to be selected by devices UE1, UE2, UE3 for their own transmissions (enough being expressed by the measured CBR being below the congestion level threshold). This leads to the end of the first resource sharing process at step S3. However, at step S1, if the measured CBR is above the congestion level threshold, the first device UE1 evaluates that the resource pool RP is congested, leading to other devices UE2, UE3 possibly lacking available radio resources to be selected in the resource pool RP for their own transmissions. This case leads to step S2. The first device UE1 may also use another metric than/in addition to the Channel Busy Ratio (CBR) to evaluate the congestion level within the resource pool RP. The congestion level within the resource pool RP is thus a primary criterion upon which the first resource sharing process will be launched by the first device UE1.

At step S2, the first device UE1 evaluates whether it possesses available resource elements within its first set of allocated radio resources in order to share such resource elements with other devices. An available resource element of the first device UE1 refers to a resource element which is a part of the first set of allocated radio resources, but which is not needed by the first device UE1 for its own transmissions. In order to determine if it has available resource elements for sharing, the first device UE 1 may obtain a measurement of a first resource occupation, the first resource occupation referring to an amount of radio resources selected by the first device UE1 within the resource pool RP for its transmissions. The first resource occupation may refer to a size of the first set of allocated radio resources. The first device UE1 also obtain a value of a first resource usage, referring to an amount of radio resource elements actually required by the first device UE1 for its own transmissions. Such value of the first resource usage may for instance correspond to a Channel Usage Ratio (CR) of the first device UE1, which relies on counting the total number of subchannels allocated to the first device UE 1 which will be transmitted in a delimited time (1000 ms for example). In a particular embodiment, the value of the first resource usage may also depend on the congestion level of the resource pool RP, the first device UE 1 being configured with resource usage limits. For instance, when there is no congestion in the resource pool RP (that is, the congestion level is below the congestion level threshold), the first device UE1 may transmit its data packets using the optimized amount of radio resources within the first set of allocated radio resources, the optimized amount being defined as an amount of radio resources used at a given modulation to optimize the quality and reliability of its transmissions as well as minimize transmission errors. However, in the case of a high congestion level of the resource pool RP (high meaning a congestion level above the congestion level threshold), the first resource usage may be limited by a predefined resource usage limit, requiring for instance the first device UE1 to adapt its Modulation and Coding Scheme (MCS) so as to reduce its transmissions on a smaller amount of radio resources (smaller amount meaning below the optimized amount).

At step S2, the first device UE1 is considered to have available resource elements for sharing if the first resource occupation exceeds the first resource usage. Consequently, the first device UE1 may be able to perform the first resource sharing process if the amount of radio resources allocated to the first device UE (that is, the size of the first set of allocated radio resources) exceeds the amount of radio resource elements effectively used by the first device UE1 for its transmissions, that is the first resource usage. The amount of resource elements available for sharing by the first device UE1 may thus correspond to the size difference between the first resource occupation and the first resource usage. The availability of resource elements to be shared by the first device UE1 may be a primary criterion for performing the resource sharing process.

However, at step S2, if the first device UE1 determines that it does not have available resource elements for sharing, the first device cannot perform the first resource sharing process which leads to step S3. This is the case, for instance, if the first resource occupation does not exceed the first resource usage.

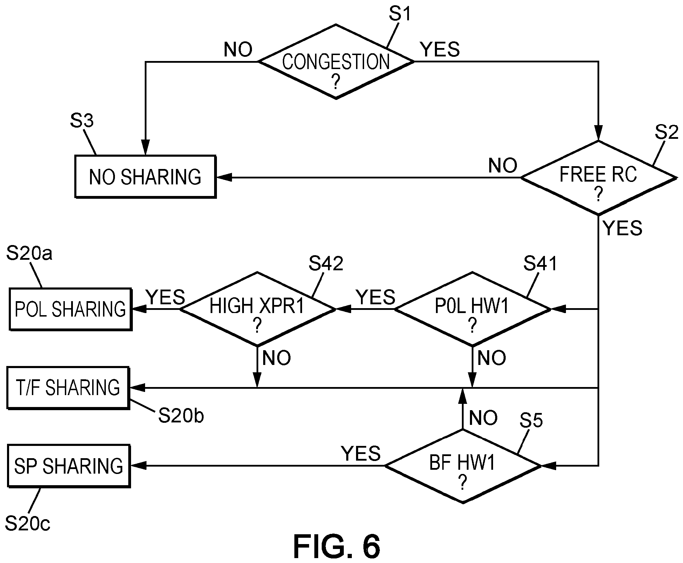

If the resource pool RP is considered to be congested at step S1 and the first device UE1 has available resource elements to be shared at step S2, then the first device UE1 is able to perform the last phase of the resource sharing process at step S20. At step S20, the first device UE1 emits an indication that resource elements are available for sharing, for instance via a sharing signaling message SSM within its initial transmission TR1, such indication containing further information about the resource elements to be shared by the first device UE1 as detailed previously. The process of determining the content of such indication will be detailed in the description of Figure 6.

An intermediary step (not represented on figure 4) before the first device UE1 proceeds to share the indication that it has resource elements available for sharing at step S20 may consist in the first device UE1 verifying that the resource elements available for sharing identified at step S2 (or that the first set of allocated radio resources overall) have no pre-configured restriction disabling such resource elements to be shared. Such pre-configured restrictions may be predefined by the network NW and may be proper to each resource pool RP deployed by the network NW based on a geographic criterion for example. The first device UE1 may obtain (for example when obtaining the first set of allocated radio resources) a pre-configured message which enables or disables the sharing of its resource elements according to predefined criteria. If no pre-configured restriction lies upon the resource elements available for sharing, the first device may proceed to the sharing at step S20. Otherwise, the first resource sharing process ends at step S3.

The sharing signaling message SSM emitted at step S20 contains a bit "1" indicating that at least one resource element is available for sharing. In another embodiment, the emission of the sharing signaling message SSM itself implies that at least one resource element is shared and the sharing signaling message SSM directly contains details about the resource elements to be shared.

The indication that resource elements are available for sharing is emitted by the first device UE1 at step S20 and may be transmitted through direct communication D2D, using the PC5 interface. Such indication may be included in the sharing signaling message SSM as part of a groupcast or a broadcast transmission for example. The sharing signaling message may thus emitted by the first device UE1 within the transmission range of the first device UE1 without aiming at any specific other device UE2, UE3.

It is now referred to Figure 5. Figure 5 is a flowchart representing steps of a second resource sharing process performed by a second device UE2 of the wireless communication network NW.

In order for a second device UE2 to perform a second resource sharing process, a complete first resource sharing process must have been performed by a first device UE1 beforehand.

The second device UE2 is supposed to be different from the first device UE1 on the one hand, and different from the receiving device of the first device UE1, in case of unicast or groupcast transmissions for example.

After the first device UE1 decides to share at least a resource element of the first set of allocated radio resources through the emission of an indication that resource elements are available for sharing via for example, a sharing signaling message SSM at step S20 of the first resource sharing process, the indication is potentially received and decoded at a step S21 by one or several devices UE2, UE3 of the wireless communication network NW.

The number as well as the identity of the devices UE2, UE3 receiving the sharing signaling message SSM emitted by the first device UE1 depend on several parameters such as the software and hardware capabilities of the devices UE2, UE3 (devices UE2, UE3 should be able to implement a decoding scheme in order to decode the sharing signaling message SSM), the geographical positions of the devices UE2, UE3 with respect to the first device UE1 and/or the transmission power of the signaling emitted by the first device UE1. Indeed, in order to receive the sharing signaling message SSM emitted by the first device UE1, a second device UE2 should be able to use device-to-device communication with the first device UE1, have NR V2X capacities, receive the sharing signaling message SSM with sufficient transmission power for example. Another device UE2 receiving the sharing signaling message SSM of the first device UE1 may also have a particular timing with respect to the first device UE1 regarding the resource selection procedure: for instance, the other device UE2 may be able to receive the sharing signaling message SSM only if the first device UE1 emits the sharing signaling message SSM while the other device UE2 launches the sensing phase of its resource selection procedure in order to find candidate radio resources for its own transmissions. The indication emitted by the first device UE1 may thus be decoded by the other device UE2 during the sensing phase of the other device UE2, for example in the same resource pool RP as the one of the first device UE1.

In the context of the present description, a second device UE2 thus refers to a device of the wireless communication network NW, different from the first device UE1, which receives the indication that resource elements are available for sharing via for example, the sharing signaling message SSM emitted by the first device UE1 through the first resource sharing process. Figure 5 describes the second resource sharing process from the perspective of only one second device UE2 but in another embodiment, several devices UE2, UE3 receive the sharing signaling message SSM of the first device UE1 and perform the same second resource sharing process.

At step S21, after receiving the indication that resource elements are available for sharing (for example, as a sharing signaling message SSM), the second device UE2 decodes the sharing signaling message SSM using a decoding scheme implemented by the second device UE2. The second device UE2 is thus able to read a succession of bits contained in the sharing signaling message SSM and describing the resource elements available for sharing by the first device UE1. In one embodiment, the emission of the sharing signaling message SSM by the first device UE1 occurs only if there is at least one resource element available for sharing within the first set of allocated resources of the first device UE1. In this case, upon receiving and decoding the sharing signaling message SSM, the second device UE2 directly identifies that at least one resource element is available for sharing, which triggers the next steps of the second resource sharing process and which consist in the second device UE2 deciding either to utilize the resource element available for sharing or not. In another embodiment, the sharing signaling message SSM contains at least one bit indicating the existence of a shared resource, such a bit indicating "1" if at least one resource element is available for sharing and "0" if no resource element is shared. In this case, the next steps of the second resource sharing process are triggered by the second device UE2 only if the decoding of the sharing signaling message decodes a bit indicating the existence of a shared resource corresponding to "1".

Upon determining that resource elements are available for sharing and before pursuing the second resource sharing process, the second device UE2 may verify that it has no pre-configured restriction disabling to utilize the resource elements made available for sharing. Such pre-configured restrictions may be predefined by the network NW and may be proper to each resource pool RP deployed by the network NW based on a geographic criterion for example. The second device UE2 may obtain (for example from a network unit such as the base station) a pre-configured message which enables or disables the use of the shared resource elements according to predefined criteria. If no pre-configured restriction lies upon utilizing the resource elements available for sharing, the second device UE2 may pursue the second resource selection process.

If the second device UE2 identifies the sharing signaling message SSM as indicating that at least one resource element is available for sharing, the second device UE2 may proceed to decide either to utilize the resource elements available for sharing or not. To that end, at step S22 of the second resource sharing procedure, the second device UE2 evaluates a congestion level of the resource pool RP based on an indication about the congestion level in the resource pool RP such as the Channel Busy Ratio (CBR) for each subframe of the resource pool RP, similarly to step S1 performed by the first device UE1 in the first resource sharing process. Such indication about the congestion level in the resource pool RP may either be measured by the second device UE2 or received by the second device UE2 from another network unit such as the base station BS or another device. Therefore, the CBR obtained by the second device UE2 gives a metric reflecting the recent congestion level within the resource pool RP. The second device UE2 also stores one or different congestion level thresholds which are compared with the measured CBR in the resource pool RP. Such congestion level thresholds can be the same or different as the one stored by the first device UE1. For example, if the second device UE2 stores a congestion level threshold equaling 0,7, then a CBR below 0,7 shows that the resource pool RP is not congested from the perspective of the second device UE2. As a consequence, at step S22, if the CBR measured by the second device UE2 is below the congestion level threshold, the second device UE2 determines that the resource pool RP is not congested and there may be no need to utilize the resource elements made available and notified through the sharing signaling message SSM, since the resource pool RP is considered to have enough available radio resources to be selected by the second device UE2, UE3 for its own transmissions (enough being expressed by the measured CBR being below the congestion level threshold). In this case, the second device UE2 decides not to utilize the resource element shared by the first device UE1 and ends the second resource sharing process at step S23. Such step S23 consists in simply ignoring the sharing signaling message SSM received at step S21. In another embodiment, if the second device UE2 has only decoded part of the sharing signaling message SSM (for example, if the second device UE2 only decoded the bit "1" indicating the availability of a resource element to be shared and not the rest of the sharing signaling message SSM detailing the actual resource element), then at step S23, the second device UE2 ignores the rest of the sharing signaling message SSM without reading the other bits giving details about the shared resource element. This embodiment particularly enables the second device UE2 to gain time and processor energy by not decoding the rest of the sharing signaling message SSM, since the second device UE2 knows, after step S22, that it does not need to resort to resource sharing with other devices (with the first device UE1 in this case).

However, if, at step S22, the measured congestion level in the resource pool RP (such as the CBR) is above the congestion level threshold stored by the second device UE2, the second device UE2 continues the second resource sharing process since it considers that the radio resources potentially available in the resource pool RP may not be sufficient for its own transmissions due to congestion and that a complementary way of obtaining resources such as the resource elements made available through the sharing signaling message SSM may be necessary. A congested resource pool RP is thus a secondary criterion for the second device UE2 to utilize the shared resource elements.

In this case, the second device UE2 proceeds to step S24 of the second resource sharing process. At step S24, the second device UE2 evaluates whether the resource elements available for sharing is enough for its own transmissions. By enough, it is understood that in order to be utilized by the second device UE2 for its own transmissions, the resource element shared by the first device UE1 must present enough OFDM symbols and resource blocks so that the data transmissions of the second device UE2 using such shared resource elements respect the transmissions constraints of the second device UE2 in terms of reliability and Quality of Service (QoS) for instance. To that end, at step S24, the second device UE2 obtains on the one hand, a measurement of an amount of radio resource element(s) it needs in order to support its data transmissions while respecting its transmission constraints. Such amount of radio resources needed by the second device UE2 for its own transmissions is referred to as the second resource usage of the second device UE2. On the other hand, the second device UE2 obtains a size of the resource element shared by the first device UE1 by decoding the sharing signaling message SSM. In one embodiment, at least part of the binary digits contained in the sharing signaling message SSM gives the size of the resource element made available for sharing by the first device UE1 (that is, an explicit number of OFDM symbols and resource blocks made available for sharing is detailed). In another embodiment, the sharing signaling message SSM contains information about the exact position of the resource element to be shared within the resource pool (that is, at least part of the binary digits of the sharing signaling message SSM representing the starting and end positions of the resource element(s) available for sharing in at least the time and frequency domains of the first set of allocated resources). In that case, the second device UE2 is able to process such information contained in the sharing signaling message SSM so that to determine a size of the shared resource element(s). At step S24, the second device UE2 compares the measurement of its second resource usage with the size of the resource element(s) made available by the first device UE1 through the sharing signaling message SSM. If the size of the shared resource element(s) is inferior to the second resource usage, it means that the resource element made available by the first device UE1 does not enable the second device UE2 to perform its own transmissions using such shared resource element(s), thus, the second device UE2 decides not to use the resource element(s) made available by the first device UE1 which leads to step S23, where the second resource sharing procedure is dropped by the second device UE2. The size of the shared resource element(s) being superior to the size of the second resource usage is thus a secondary criterion for the second device UE2 to utilize the shared resource element(s).

Thus, if, at step S24, the second resource usage of the second device UE2 is equal or inferior to the size of the resource element(s) made available by the first device UE1, it means that the resource element(s) shared by the first device UE1 is sufficient to support the transmissions of the second device UE2. In this case, the second device UE2 decides, at step S25, to utilize the resource element(s) shared by the first device UE1. In this case, at step S25, the second device UE2 sends its data packets and performs its transmissions using the dedicated part of the first set of allocated radio resources of the first device UE1 corresponding to the resource element(s) shared by the first device UE1. In other words, when the second device UE2 decides to utilize the resource element(s) shared by the first device UE1, the first and second devices are paired at step S25 and the transmissions of the second device UE2 are performed under the control signaling "umbrella" of the first device UE1. In another embodiment, at step S25, the second device UE2 emits a control signaling in response to the sharing signaling message SSM in order to inform about its intention to utilize the shared resource element(s). Such response signaling may be sent by the second device UE2 over a feedback channel referred to in NR V2X as the Physical Sidelink Feedback Channel (PSFCH).

The second resource sharing process may also comprise a step prior to the step S25 wherein the second device UE2 may also evaluate a geographically-related information contained in the sharing signaling message SSM, for example in order to obtain a geographical zone associated with the resource elements available for sharing. The second device UE2 may end the second resource sharing process at step S23 and not utilize the resource elements shared by the first device UE1 if the second device UE2 is not located in the geographical zone for example.

The second resource sharing process may also comprises a step prior to the step S25 wherein the second device UE2 may also evaluate a time-related information contained in the sharing signaling message SSM so as to obtain an indication about a time interval within which the resource elements made available by the first device UE1 must be utilized. The second device UE2 may also determine a time duration during which it has to perform its transmissions based for example on the second device UE2 latency requirements. Such time duration may correspond to the selection and transmission window STW of the second device UE2 within the resource pool RP. The second device UE2 may end the second resource sharing process at step S23 and not utilize the resource elements shared by the first device UE1 if the time interval and the time duration do not overlap for example.

It is now referred to Figure 6. Figure 6 is a flowchart representing steps of the first resource sharing process performed by the first device UE1. Figure 6 is a detailed flowchart of the general steps represented on Figure 4.

After evaluating whether the congestion level of the resource pool RP requires resource sharing or not at step S 1 and whether the first set of allocated radio resources presents available resource element(s) for sharing or not at step S2 as detailed by Figure 4, the first device UE1 determines in which dimensions of transmission (or domains) it may share resource element(s).

The resource pool RP being multiplexed in the time and frequency dimensions of transmission, the resource elements are shared by the first device UE1 in the time and frequency dimensions of transmission at step S20b. At step S20b, the first device UE1 may emit an indication that at least one resource element is available for sharing, for example as a sharing signaling message SSM, and may detail the precise characteristics of such resource elements which delimit and define the shared resource element(s).

However, depending on the hardware capabilities HW1 of the first device UE1, on transmission constraints of the first device UE1 and/or on channel conditions, the first device UE1 may be able to share the available resource element(s) in a different polarization and/or space dimension of transmission using multiplexing, and thus increasing the available spectrum resources.

At a step S41, the first device UE1 pursues the first resource sharing process by determining if it is able to perform polarization multiplexing, that is to share resource element(s) in a specific polarization. To that end, the hardware HW1 of the first device UE1 must include at least two first polarized antennas presenting for instance a vertical V polarization plane and a horizontal H polarization plane with a separate radiofrequency chain per first polarized antenna. With such hardware HW1, the first device UE1 is thus able to separate different polarization domains and can for instance, perform simultaneous transmissions using radio resources in the vertical V polarization plane and in the horizontal H polarization plane in an independent way.

The hardware capabilities HW1 of the first device UE1 enabling the first device UE1 to separate different polarizations at step S41 must be accompanied with favorable channel conditions at step S42. Favorable conditions are defined here as an acceptable level of orthogonality between the different polarization domains. The level of orthogonality of two different polarizations can be measured with a level of cross-polarization radiation called the cross-polarization ratio or XPR. At step S42, the first device UE1 is able to physically measure a level of cross-polarization radiation at its side as well as at the side of a receiving device of the first device UE1 over a predefined period of time such as one second for instance. Such measurement of the XPR is particularly possible because the first device UE1 is equipped with specific hardware HW1 for polarization separation.

The acceptable level of orthogonality between the different polarization domains refers to a level of cross-polarization ratio above a cross-polarization ratio threshold that may be stored by the first device UE1 in a first memory unit. At step S42, the measurement of the level of cross-polarization ratio by the first device UE1 is compared to the cross-polarization ratio threshold stored by the first device UE1. If the measured level of cross-polarization ratio is above the cross-polarization ratio threshold at step S42, it is considered that the level of orthogonality between the different polarizations is enough to ensure a good isolation between the different polarizations and thus a good quality of transmission of the first device UE1 towards its receiving device. In this case, the resource element(s) shared by the first device UE1 are shared at least in the polarization dimension of transmission at step S20a.

However, if the conditions about the hardware capability of the first device UE1 at S41 and the channel conditions at step S42 are not reunited, the first device UE1 cannot share resource element(s) in the polarization dimension of transmission. Hardware capabilities HW1 for polarization multiplexing and favorable channel conditions are thus primary criteria for resource sharing in the polarization domain.

At a step S5, the first device UE1 pursues the first resource sharing process by determining if it is able to share resource element(s) in the space dimension of transmission with beamforming, that is by sharing resources in a specific direction using a specific beam. To that end, the hardware HW1 of the first device UE1 must include at least an array of antennas (or antenna panel) and/or directed antennas oriented in different spatial directions. With such hardware HW1, the first device UE1 is thus able to separate different beams in the space domain and can for instance, perform transmissions using radio resources in two different directions using two different beams in an independent way.

If the first device UE1 is equipped with such specific hardware HW1 at step S5, then it is able to share resource element(s) in the space domain using a specific and identified beam of its antenna panel at a step S20c. Hardware capabilities HW1 for spatial multiplexing is thus a primary criterion for resource sharing in the spatial domain.

In a particular embodiment, at step S5, channel conditions or communication constraints between the first device UE1 and its receiving device may be furthermore considered by the first device UE1 in order to ensure a high level of orthogonality between beams or avoid crosstalk interference between different beams. The nature of transmissions of the first device UE1 should also be compatible with the constraints of spatial multiplexing. Such measurements may be related to XPR or Line-of-Sight within the network NW and may be obtained by the first device UE1.

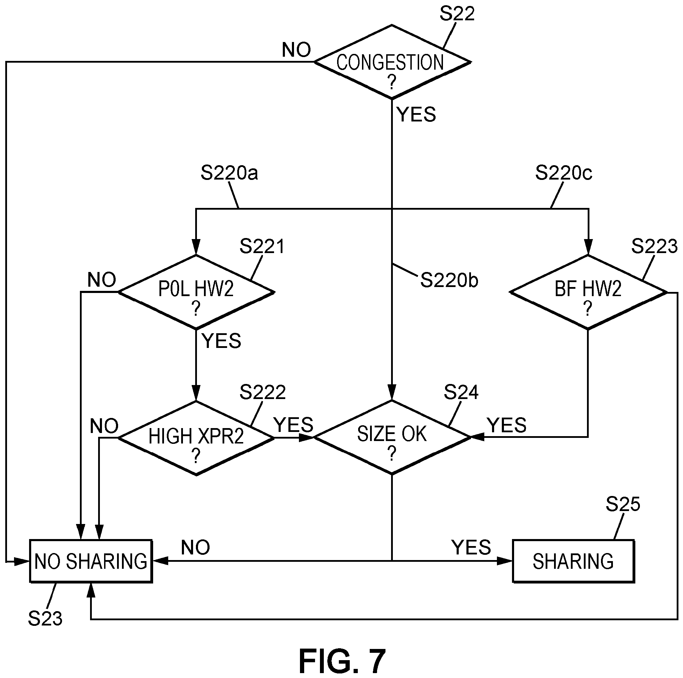

It is now referred to Figure 7. Figure 7 is a flowchart representing steps of the second resource sharing process performed by the second device UE2 after receiving a sharing signaling message SSM. Figure 7 is a detailed flowchart of the general steps represented on Figure 5.

After evaluating whether the congestion level of the resource pool RP requires utilizing shared resource element(s) or not at step S22 as detailed by Figure 5, the second device UE2 pursues the second resource sharing process by deciding whether it is able to utilize the shared resource element based on its description within the sharing signaling message SSM. The binary digits contained in the sharing signaling message SSM details the exact position of the resource element to be shared. As a consequence, by decoding the sharing signaling message SSM received, the second device UE2 is able to identify characteristics of the resource element to be shared in terms of size, position within the resource pool RP and dimensions of transmission. Depending on such characteristics, the second device UE2 triggers different following steps.

If the second device UE2 identifies that the resource element to be shared is shared in the polarization domain, steps of branch S220a of the second resource sharing process are triggered. If the second device UE2 identifies that the resource element to be shared is shared in the time and frequency domains, steps of branch S220b of the second resource sharing process are triggered. If the second device UE2 identifies that the resource element to be shared is shared in the space domain, steps of branch S220c of the second resource sharing process are triggered. Branches S220a, 220b and 220c are not exclusive and may be triggered simultaneously or successively, notably in the case when resource sharing by the first device UE1 occurs in several different dimensions of transmission.

In branch S220a, the sharing signaling message SSM details a resource element shared in the polarization dimension of transmission. The second device UE2 must thus first determine at step S221, whether it possesses the hardware capabilities HW2 to utilize resource element(s) shared in the polarization dimension of transmission. At step S221, the second device UE2 thus determines if its hardware HW2 includes at least two second polarized antennas with a separate radiofrequency chain per second polarized antenna, so that the second device UE2 is able to perform transmissions in the same polarization as the one proposed in the sharing signaling message SSM. If the hardware capabilities HW2 of the second device UE2 include such second polarized antennas with separate radiofrequency chains, the second device UE2 then determines at step S222 whether the channel conditions at its side and at a receiving device side of the second device UE2 are favorable for a polarization transmission. A receiving device of the second device UE2 refers here to a device of the network NW receiving the transmissions of the second device UE2 (potentially using the shared resource element). Favorable channel conditions are defined similarly to the favorable channel conditions for the polarization multiplexing of the first device UE1.

In a similar way to step S42 of the first resource sharing process performed by the first device UE1, at step S222, the second device UE2 obtains a measurement of a cross-polarization ratio (or XPR) at its side and at its receiving device side, and then compares such measured XPR with a predefined cross-polarization ratio threshold stored in a second memory unit of the second device UE2. Such predefined cross-polarization ratio threshold may be the same or different as the predefined cross-polarization ratio threshold stored by the first device UE1 at step S42. If, at step S222, the second device UE2 measures a value of the XPR above the predefined cross-polarization ratio threshold, then it determines at step S222 that it is able to perform its transmissions in the polarization domain indicated by the sharing signaling message SSM. However, if the second device UE2 is not equipped with the necessary hardware HW2 to be able to separate different polarizations at step 221 or measures unfavorable channel conditions for polarization transmission at step S222 (unfavorable meaning that the measured XPR at step S22 is below the predefined cross-polarization ratio threshold stored by the second device UE2), then the resource element(s) made available by the first device UE1 and detailed in the sharing signaling message SSM cannot be utilized by the second device UE2. In this case, the second resource sharing process is stopped at step S23 and no resource sharing between the first device UE1 and the second device UE2 is performed, due to lacking hardware capabilities HW2 of the second device UE2 or lacking favorable channel conditions for polarization transmission on the second device (or its receiving device) side. Hardware capabilities HW2 for polarization multiplexing and favorable channel conditions are thus secondary criteria for resource sharing in the polarization domain.

In branch S220c, the sharing signaling message SSM details a resource element(s) shared in the space dimension of transmission. By decoding the sharing signaling message SSM, the second device UE2 also identifies the direction (or beam) of the shared resource element. The second device UE2 must thus determine at step S223, whether it possesses the hardware capabilities HW2 to utilize resource element(s) shared in the space dimension of transmission and more particularly, if it is able to perform beamforming in the same direction as the direction of the shared resource element(s). At step S223, the second device UE2 thus determines if its hardware HW2 includes at least an array of antennas (or antenna panel) and/or directed antennas oriented in different spatial directions, including the spatial direction of the shared resource element(s).

If the second device UE2 is equipped with such specific hardware HW2 at step S223, then the second device UE2 determines that it has the hardware capability HW2 to utilize the shared resource element(s) in the space domain using the specific and identified beam of its antenna panel at step S223. However, if the hardware HW2 of the second device UE2 does not enable it to perform beamforming in the required direction, then the resource element(s) made available by the first device UE1 and detailed in the sharing signaling message SSM cannot be utilized by the second device UE2. In this case, the second resource sharing process is stopped at step S23 and no resource sharing between the first device UE1 and the second device UE2 is performed, due to lacking hardware capabilities HW2 of the second device UE2. Hardware capabilities HW2 for spatial multiplexing in the same direction as the direction of the shared resource element is thus a secondary criterion for resource sharing in the spatial domain.

In branch S220b, the resource element(s) made available by the first device UE1 is shared in the "basic" resource pool RP, basic referring to a resource pool RP without spatial and/or polarization multiplexing. In this case, the resource sharing requires neither specific polarization and/or beamforming hardware capabilities nor particular channel conditions.

The common secondary criterion for the second device UE2 to utilize the shared resource element is the size of the shared resource element(s) being equal or superior to the amount of radio resource element(s) needed by the second device UE2 for its own transmissions, that is to the second resource usage, at step S24. Such secondary criterion on the size of the shared resource element(s) was detailed in the description of step S24 of Figure 5. Indeed, in branch S220a, if the secondary criteria of hardware capabilities HW2 and favorable channel conditions are met, the second resource sharing process is led to step S24, wherein the second device UE2 determines whether the resource element(s) shared in the polarization dimension of transmission are enough to cover the transmissions of the second device UE2. Similarly, in branch S220c, if the secondary criterion of hardware capabilities HW2 is met, the second resource sharing process is led to step S24, wherein the second device UE2 determines whether the resource element(s) shared in the space dimension of transmission are enough to cover the transmissions of the second device UE2. In the case of branch S220b, the size of the shared resource element(s) being superior to the second resource usage is the only secondary criterion considered.

If such secondary criterion is met at step S24, the second device UE2 decides to utilize the resource element(s) shared by the first device UE1 at step S25. The details of such resource sharing are given in the description of Figure 5. However, if at step S24, the size of the shared resource element(s) is below the amount of radio resource element(s) needed by the second device UE2 for its own transmissions, then the second device UE2 decides not to utilize the resource element(s) shared by the first device UE1 and ends the second resource sharing process at step S23.

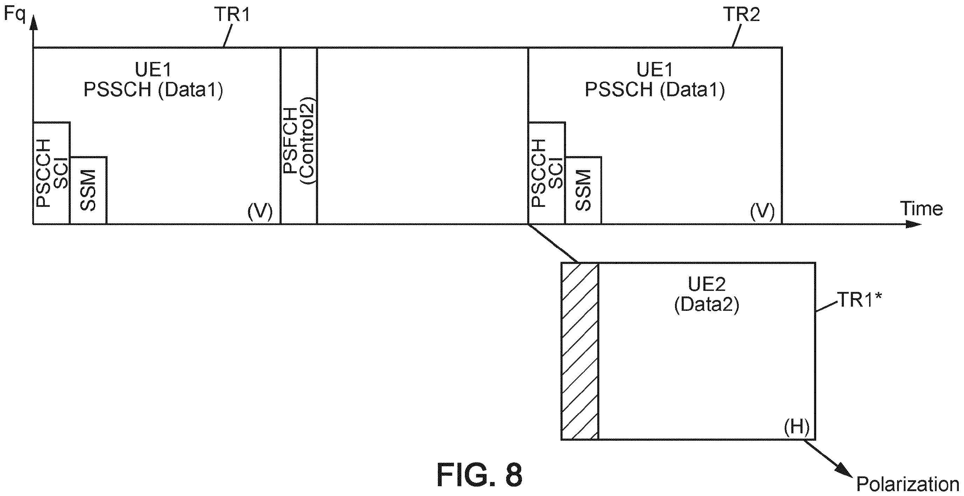

It is now referred to Figures 8, 9 and 10. Figures 8, 9 and 10 represent a resource sharing on a polarization dimension of transmission, on a space dimension of transmission and on a time-frequency dimension of transmission respectively, according to a possible embodiment of the invention. Such resource sharing signaling are represented on three separate figures but in other embodiments, resource sharing may be performed in several dimensions of transmissions at a time. Resource sharing is performed between a first device UE1 and a second device UE2 of the wireless communication network NW.

Referring to Figure 8, the first device UE1 determines, after performing the first resource sharing process as detailed in the description of Figures 4 and 6, that it is able to share a resource element in the polarization dimension of transmission and more precisely in a horizontal polarization plane. In such embodiment, it means that:
- the resource pool RP is considered congested by the first device UE1,
- the first device UE1 is equipped with a specific hardware HW1 including at least dual first polarized antennas with a radiofrequency chain per first polarized antenna, the dual first polarized antennas allowing transmission in the vertical and the horizontal polarization planes respectively,
- the channel conditions at the first device UE1 side and the receiving device of the first device UE1 side reflect a high level of cross-polarization ratio (that is, above a predefined threshold), meaning that the channel conditions are favorable for polarization transmission,
- at least one of the polarization planes (here, the horizontal H one) is unused by the first device UE1 for its own transmission and is thus available for sharing by the first device.

In this case, while performing an initial transmission TR1 of the first device UE1 in the vertical polarization plane, the first device UE1 adds a sharing signaling message SSM embedded in the PSSCH part of its initial transmission TR1 in order to signal that a resource element is available for sharing in the polarization dimension of transmission, such resource element being precisely shared in the horizontal polarization plane.

The Sidelink Control Information (SCI) embedded in the PSCCH part of the first device UE 1 remains unchanged throughout the whole resource sharing process and does not overlap with the shared resource element so that, in accordance with the existing NR V2X autonomous resource allocation procedure, the SCI is decodable by all other devices of the network NW, either enabled with a resource sharing feature or not, thus assuring backward compatibility with the existing signaling procedure.

The sharing signaling message SSM may be initiated by the first device UE1 within its transmission range and/or broadcasted so that any other device within such transmission range may receive the sharing signaling message SSM.

Referring to Figure 8, a second device UE2 of the wireless communication network NW is considered to receive the sharing signaling message SSM emitted by the first device UE1 through its initial transmission TR1 and, after performing the second resource sharing process as detailed in the description of Figures 5 and 7, the second device UE2 decides to utilize the resource element shared by the first device UE1 in the polarization dimension of transmission and more precisely in the horizontal polarization plane. In such embodiment, it means that:
- the resource pool RP is considered congested by the second device UE2,
- the second device UE2 is equipped with a specific hardware HW2 including at least dual second polarized antennas with a radiofrequency chain per second polarized antenna, one of the dual second polarized antennas allowing transmission in the horizontal polarization plane,
- the channel conditions at the second device UE2 side and the receiving device of the second device UE2 side reflect a high level of cross-polarization ratio (that is, above a predefined threshold), meaning that the channel conditions are favorable for polarization transmission,
- the size of the resource element(s) shared by the first device UE1 in the horizontal polarization plane is sufficient for the data and control transmissions Data2 of the second device UE2.

In this case, the second device UE2 decides to utilize the resource element(s) shared by the first device UE1. As a consequence, when the second transmission TR2 of the first device UE1 occurs in the vertical V polarization plane, an initial transmission TR1* of the second device UE2 occurs in parallel in the horizontal H polarization plane using the dedicated resource element(s) made available by the first device UE1. In particular, the PSCCH part containing the SCI of the first device UE1 is left unchanged by the second device UE2 in all dimensions of transmission (that is here, frequency, time and polarization), including in the horizontal H polarization plane. This unchanging part of the PSCCH of the first device UE1 is represented on Figure 8 as a striped zone. In a particular embodiment represented on Figure 8, when deciding to utilize the resource element(s) shared by the first device UE1, the second device UE2 can emit a response control signaling through the Physical Sidelink Feedback Channel (PSFCH) in order to inform other devices (including the first device UE1) of an intention to utilize the shared resource element(s) by the second device UE2. Such response control signaling is performed before the initial transmission TR1* of the second device UE2.

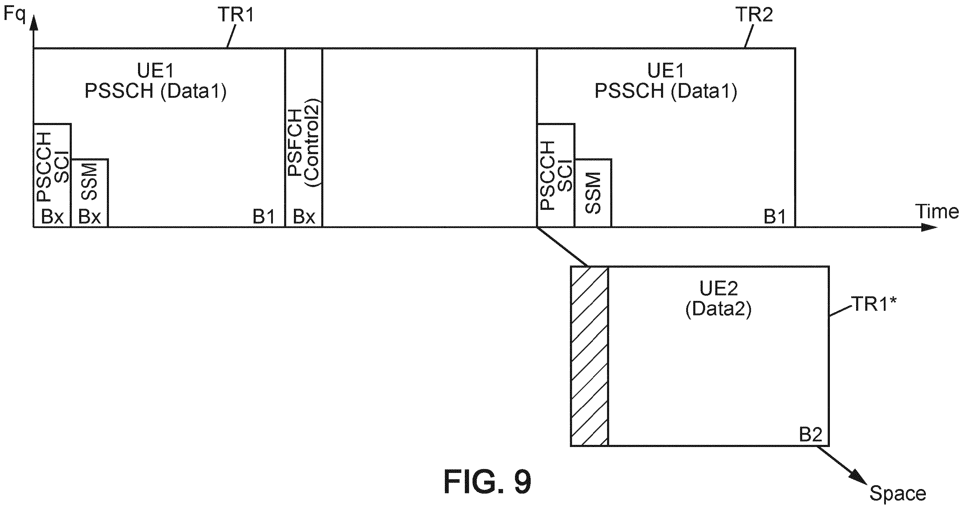

Referring to Figure 9, the first device UE1 determines, after performing the first resource sharing process as detailed in the description of Figures 4 and 6, that it is able to share a resource element in the space dimension of transmission and more precisely in a specific direction using a beam B2. In such embodiment, it means that:
- the resource pool RP is considered congested by the first device UE1,
- the first device UE1 is equipped with a specific hardware HW1 including at least a first array of directed antennas, such first array of antennas including at least two different beams allowing transmission in two different directions using a beams B1 and B2 respectively,
- at least one of the directions (here, the direction using beam B2) is unused by the first device UE1 for its own transmission and is thus available for sharing by the first device.
- in a particular embodiment, the channel conditions at the first device UE1 side and the receiving device of the first device UE 1 side reflect a Line-of-Sight-dominated environment, so that there is a high level of orthogonality between beams B1 and B2, which enables optimized channel conditions for beamforming.

In this case, while performing an initial transmission TR1 of the first device UE1 using beam B1, the first device UE1 adds a sharing signaling message SSM embedded in the PSSCH part of its initial transmission TR1 in order to signal that a resource element is available for sharing in the space dimension of transmission, such resource element being precisely shared with beam B2. Such sharing signaling message SSM is then broadcasted by the first device UE1 in all directions Bx.

The Sidelink Control Information (SCI) embedded in the PSCCH part of the first device UE1 and the SSM embedded in the PSSCH part of the first device UE1 are emitted in all spatial directions Bx. In particular, the Sidelink Control Information (SCI) embedded in the PSCCH part of the first device UE1 remains unchanged throughout the whole resource sharing process and does not overlap with the shared resource element so that, in accordance with the existing NR V2X autonomous resource allocation procedure, the SCI is decodable by all other devices of the network NW, either enabled with a resource sharing feature or not, thus assuring backward compatibility with the existing signaling procedure.

Referring to Figure 9, a second device UE2 of the wireless communication network NW is considered to receive the sharing signaling message SSM emitted by the first device UE1 through its initial transmission TR1 and, after performing the second resource sharing process as detailed in the description of Figures 5 and 7, the second device UE2 decides to utilize the resource element(s) shared by the first device UE1 in the space dimension of transmission and more precisely in the direction of beam B2. In such embodiment, it means that:
- the resource pool RP is considered congested by the second device UE2,
- the second device UE2 is equipped with a specific hardware HW2 including at least a second array of directed antennas, such second array of antennas including at least a beam for transmission in the same direction as beam B2,
- the size of the resource element(s) shared by the first device UE1 using beam B2 is sufficient for the data and control transmissions Data2 of the second device UE2,
- in a particular embodiment, the channel conditions at the second device UE2 side and the receiving device of the second device UE2 side reflect a Line-of-Sight-dominated environment, so that there is a high level of orthogonality between beams of the second device UE2 including the beam having the same direction as beam B2, which enables optimized channel conditions for beamforming initiated by the second device UE2.

In this case, the second device UE2 decides to utilize the resource element(s) shared by the first device UE1. As a consequence, when the second transmission TR2 of the first device UE1 occurs in the direction of beam B1, an initial transmission TR1* of the second device UE2 occurs in parallel in the direction of beam B2 using the dedicated resource element(s) made available by the first device UE1. In particular, the PSCCH part containing the SCI of the first device UE1 is left unchanged by the second device UE2 in all dimensions of transmission (that is here, frequency, time and space), including in the direction of beam B2. This unchanging part of the PSCCH of the first device UE1 is represented on Figure 9 as a striped zone. In a particular embodiment represented on Figure 9, when deciding to utilize the resource element shared by the first device UE1, the second device UE2 can emit a response control signaling through the Physical Sidelink Feedback Channel (PSFCH) in order to inform other devices (including the first device UE1) of an intention to utilize the shared resource element by the second device UE2. Such response control signaling is performed before the initial transmission TR1* of the second device UE2 in all directions (including directions of beams B 1 and B2).

Referring to Figure 10, the first device UE1 determines, after performing the first resource sharing process as detailed in the description of Figures 4 and 6, that it is able to share a resource element in the time-frequency dimension of transmission. In such embodiment, it means that:
- the resource pool RP is considered congested by the first device UE1,
- a given number of OFDM symbols of the slot allocated to the first device UE1 as well as a given number of resource blocks allocated to the first device UE1 are unused by the first device UE1 for its own transmission and thus form an available resource element(s) for sharing by the first device. Such available free resource element(s) is represented on Figure 10 as FREE RE.

In this case, while performing an initial transmission TR1 of the first device UE1 using the needed amount of OFDM symbols and resource blocks for its own transmissions (which by definition, do not include the given number of OFDM symbols and the given number of resource blocks forming the shared resource element(s)), the first device UE1 adds a sharing signaling message SSM embedded in the PSSCH part of its initial transmission TR1 in order to signal that a resource element(s) is available for sharing in the time-frequency dimension of transmission, such resource element(s) being precisely shared over the given number of OFDM symbols and the given number of resource blocks.

The Sidelink Control Information (SCI) embedded in the PSCCH part of the first device UE1 remains unchanged throughout the whole resource sharing process and does not overlap with the shared resource element so that, in accordance with the existing NR V2X autonomous resource allocation procedure, the SCI is decodable by all other devices of the network NW, either enabled with a resource sharing feature or not, thus assuring backward compatibility with the existing signaling procedure.

Referring to Figure 10, a second device UE2 of the wireless communication network NW is considered to receive the sharing signaling message SSM emitted by the first device UE1 through its initial transmission TR1 and, after performing the second resource sharing process as detailed in the description of Figures 5 and 7, the second device UE2 decides to utilize the resource element(s) shared by the first device UE1 in the time-frequency dimension of transmission. In such embodiment, it means that:
- the resource pool RP is considered congested by the second device UE2,
- the size of the resource element(s) shared by the first device UE1 (that is, the given number of OFDM symbols as well as the given number of resource blocks) is sufficient for the data and control transmissions Data2 of the second device UE2.

In this case, the second device UE2 decides to utilize the resource element(s) shared by the first device UE1. As a consequence, when the second transmission TR2 of the first device UE1 occurs over the time and frequency domains, an initial transmission TR1* of the second device UE2 occurs in parallel using the dedicated resource element(s) (that is, using the given number of OFDM symbols and the given number of resource blocks RBs) made available by the first device UE1. In particular, the PSCCH part containing the SCI of the first device UE1 is left unchanged by the second device UE2. In a particular embodiment represented on Figure 10, when deciding to utilize the resource element(s) shared by the first device UE1, the second device UE2 can emit a response control signaling through the Physical Sidelink Feedback Channel (PSFCH) in order to inform other devices (including the first device UE1) of an intention to utilize the shared resource element(s) by the second device UE2. Such response control signaling is performed before the initial transmission TR1* of the second device UE2.

## Claims

1. A method implemented by a first device (UE1) to share at least one resource element within a wireless communication network (NW), the resource element belonging to a first set of radio resources allocated to the first device (UE1) within a resource pool (RP), the first device (UE1) using a device-to-device communication within the wireless communication network (NW),
and wherein the first device (UE1) emits, through the device-to-device communication, an indication that the resource element is available for sharing, said indication being emitted based on a primary criterion, said primary criterion being related to at least a value related to a congestion level within the resource pool (RP).

2. The method according to claim 1, wherein the first device (UE1) emits a sharing signaling message (SSM) through the device-to-device communication, said sharing signaling message (SSM) containing at least said indication that the resource element is available for sharing.

3. The method according to any one of claims 1 and 2, wherein the primary criterion is further related to one or a combination of the following:
- a pre-configuration message enabling or disabling the sharing of the resource element,
- a value related to an availability of the resource element,
- a value related to a channel condition of the wireless communication network (NW), and
- hardware capabilities (HW1) of the first device (UE1).

4. The method according to any one of the precedent claims, wherein the indication that the resource element is available for sharing includes one or a combination of the following:
- at least one bit to indicate a position of the resource element available for sharing,
- at least one bit to indicate a size of the resource element available for sharing,
- at least one bit to indicate a time interval during which the resource element is available for sharing,
- at least one bit to indicate a geographical zone associated with the resource element available for sharing.

5. The method according to any one of the precedent claims, wherein the resource element is available for sharing in at least one dimension of transmission, said dimension of transmission comprising at least one element among a set of elements comprising:
- a space dimension of transmission,
- a polarization dimension of transmission, and
- a time-frequency dimension of transmission.

6. The method according to claim 3, taken in combination with any one of claims 4 and 5, the first device (UE1) obtaining an indication of a congestion level within the resource pool (RP), the first device (UE1) storing furthermore in a first memory unit (MEM-UE) at least one predefined congestion level threshold, and wherein the primary criterion is met if the congestion level exceeds the congestion level threshold.

7. The method according to claim 6, taken in combination with any one of claims 4 and 5, the first device (UE1):
- obtaining a physical measurement of a first resource occupation of the first device (UE1) and,
- determining a value related to a first resource usage of the first device (UE1) for at least one transmission of first data packets from the first device (UE1) to at least one first receiving device,
and wherein the primary criterion is met if:
- the congestion level exceeds the congestion level threshold, and
- the physical measurement of the first resource occupation of the first device exceeds the value related to the first resource usage of the first device (UE1).

8. A first device (UE1) comprising a first processing circuit (PROC-UE, MEM-UE, COM-UE) to perform the method as claimed in any one of claims 1 to 7.

9. A computer program product comprising a first set of program instruction code stored on a first computer-readable medium for the execution of the method according to any one of claims 1 to 7.

10. A method implemented by a second device (UE2) to utilize at least one resource element within a wireless communication network (NW), said resource element belonging to a first set of radio resources reserved for a first device (UE1) within a resource pool (RP), the first device (UE1) and the second device (UE2) using a device-to device communication within the wireless communication network, the method comprising:
- receiving, through the device-to-device communication, an indication that the resource element is available for sharing by the first device (UE1), and
- utilizing the resource element shared by the first device (UE1) for transmission within the wireless communication network (NW),
wherein utilizing the resource element is based on a secondary criterion, said secondary criterion being related to at least a data related to a congestion level within the resource pool.

11. The method according to claim 10, wherein the indication that the resource element is available for sharing by the first device (UE1) is received within a sharing signaling message (SSM) though the device-to-device communication.

12. The method according to any one of claims 10 and 11, wherein the secondary criterion is further related to one or a combination of the following:
- a pre-configuration message enabling or disabling utilizing the resource element,
- a data related to a channel condition of the wireless communication network (NW),
- a data related to a time interval during which the resource element is available for sharing,
- a data related to a geographical zone associated with the resource element available for sharing,
- a data related to a size of the resource element available for sharing,
- a data related to at least one dimension of transmission of the resource element available for sharing, and
- hardware capabilities (HW2) of the second device (UE2).

13. The method according to claim 12, the indication that the resource element is available for sharing by the first device (UE1) including at least a data related to a size of the resource element available for sharing, the second device (UE2) obtaining:
- a data related to a congestion level within the resource pool (RP),
- a measurement of a second resource usage of the second device (UE2) for at least one transmission of second data packets from the second device (UE2) to at least one second receiving device,
the second device (UE2) storing furthermore in a second memory unit (MEM-UE) at least one predefined congestion level threshold,
and wherein the second device (UE2) compares the measurement of the second resource usage of the second device (UE2) with the size of the resource element available for sharing, and the secondary criterion is met if:
- the congestion level exceeds the congestion level threshold, and
- the size of the resource element available for sharing by the first device (UE1) exceeds the measurement of the second resource usage of the second device (UE2).

14. The method, according to any one of the claims 10 to 13, wherein the second device (UE2) transmits second data packets to at least a second receiving device using the resource element available for sharing by the first device (UE1).

15. A second device (UE2) comprising a second processing circuit (PROC-UE, MEM-UE, COM-UE) to perform the method as claimed in any one of claims 10 to 14.

16. A computer program product comprising a second set of program instruction code stored on a second computer-readable medium for the execution of the method according to any one of claims 10 to 14.

## Patentansprüche

1. Verfahren, welches durch eine erste Vorrichtung (UE1) implementiert wird, um wenigstens ein Ressourcenelement innerhalb eines drahtlosen Kommunikationsnetzwerks (NW) zu teilen, wobei das Ressourcenelement zu einem ersten Satz von Funkressourcen gehört, welche der ersten Vorrichtung (UE1) innerhalb eines Ressourcen-Pools (RP) zugewiesen sind, wobei die erste Vorrichtung (UE1) eine Vorrichtung-zu-Vorrichtung-Kommunikation innerhalb des drahtlosen Kommunikationsnetzwerks (MW) verwendet,
und wobei die erste Vorrichtung (UE1), durch die Vorrichtung-zu-Vorrichtung-Kommunikation, einen Hinweis emittiert, dass das Ressourcenelement für ein Teilen verfügbar ist, wobei der Hinweis auf Grundlage eines primären Kriteriums emittiert wird, wobei sich primäre Kriterium auf wenigstens einen Wert bezieht, welcher sich auf einen Überlastungspegel innerhalb des Ressourcen-Pools (RP) bezieht.

2. Verfahren nach Anspruch 1, wobei die erste Vorrichtung (UE1) eine Nachricht (SSM), welche ein Teilen signalisiert, durch die Vorrichtung-zu-Vorrichtung-Kommunikation emittiert, wobei die Nachricht (SSM), welche ein Teilen signalisiert, wenigstens den Hinweis enthält, dass das Ressourcenelement für ein Teilen verfügbar ist.

3. Verfahren nach einem der Ansprüche 1 und 2, wobei sich das primäre Kriterium ferner auf eines oder eine Kombination der folgenden bezieht:
- eine Vor-Konfigurationsnachricht, welche das Teilen des Ressourcenelements aktiviert oder deaktiviert,
- einen Wert, welcher sich auf eine Verfügbarkeit des Ressourcenelements bezieht,
- einen Wert, welcher sich auf einen Kanalzustand des drahtlosen Kommunikationsnetzwerks (NW) bezieht, und
- Hardwarefunktionen (HW1) der ersten Vorrichtung (UE1).

4. Verfahren nach einem der vorhergehenden Ansprüche, wobei der Hinweis, dass das Ressourcenelement für ein Teilen verfügbar ist, eines oder eine Kombination der folgenden umfasst:
- wenigstens ein Bit, um eine Position des Ressourcenelements anzuzeigen, welches für ein Teilen verfügbar ist,
- wenigstens ein Bit, um eine Größe des Ressourcenelements anzuzeigen, welches für ein Teilen verfügbar ist,
- wenigstens ein Bit, um ein Zeitintervall anzuzeigen, während welchem das Ressourcenelement für ein Teilen verfügbar ist,
- wenigstens ein Bit, um eine geographische Zone anzuzeigen, welche dem Ressourcenelement zugeordnet ist, welches für ein Teilen verfügbar ist.

5. Verfahren nach einem der vorhergehenden Ansprüche, wobei das Ressourcenelement für ein Teilen in wenigstens einer Dimension einer Übertragung verfügbar ist, wobei die Dimension einer Übertragung wenigstens ein Element unter einem Satz von Elementen umfasst, welcher umfasst:
- eine Raumdimension einer Übertragung,
- eine Polarisationsdimension einer Übertragung, und
- eine Zeit-Frequenz-Dimension einer Übertragung.

6. Verfahren nach Anspruch 3, in Kombination mit einem der Ansprüche 4 und 5, wobei die erste Vorrichtung (UE1) einen Hinweis eines Überlastungspegels innerhalb des Ressourcen-Pools (RP) erhält, die erste Vorrichtung (UE1) ferner in einer ersten Speichereinheit (MEM-UE) wenigstens einen vordefinierten Überlastpegel-Schwellenwert speichert, und wobei das primäre Kriterium erfüllt ist, wenn der Überlastpegel den Überlastpegel-Schwellenwert überschreitet.

7. Verfahren nach Anspruch 6, in Kombination mit einem der Ansprüche 4 und 5, wobei die erste Vorrichtung (UE1):
- eine physische Messung einer ersten Ressourcenbelegung der ersten Vorrichtung (UE1) erhält, und
- einen Wert bestimmt, welcher sich auf eine erste Ressourcennutzung der ersten Vorrichtung (UE1) für wenigstens eine Übertragung erster Datenpakete von der ersten Vorrichtung (UE1) zu wenigstens einer ersten Empfangsvorrichtung bezieht,
und wobei das primäre Kriterium erfüllt ist, wenn:
- der Überlastungspegel den Überlastungspegel-Schwellenwert überschreitet, und
- die physische Messung der ersten Ressourcenbelegung der ersten Vorrichtung den Wert überschreitet, welcher sich auf die erste Ressourcennutzung der ersten Vorrichtung (UE1) bezieht.

8. Erste Vorrichtung (U1), welche eine erste Verarbeitungsschaltung (PROC-UE, MEM-UE, COM-UE) umfasst, um das Verfahren wie in einem der Ansprüche 1 bis 7 beansprucht durchzuführen.

9. Computerprogrammprodukt, umfassend einen ersten Satz von Programmanweisungscode, welcher auf einem ersten computerlesbaren Medium für die Ausführung des Verfahrens nach einem der Ansprüche 1 bis 7 gespeichert ist.

10. Verfahren, welches durch eine zweite Vorrichtung (UE2) implementiert wird, um wenigstens ein Ressourcenelement innerhalb eines drahtlosen Kommunikationsnetzwerks (NW) zu nutzen, wobei das Ressourcenelement zu einem ersten Satz von Funkressourcen gehört, welche für eine erste Vorrichtung (UE1) innerhalb eines Ressourcen-Pools (RP) reserviert sind, wobei die erste Vorrichtung (UE1) und die zweite Vorrichtung (UE2) eine Vorrichtung-zu-Vorrichtung-Kommunikation innerhalb des drahtlosen Kommunikationsnetzwerks (MW) verwenden, wobei das Verfahren umfasst:
- Empfangen, durch die Vorrichtung-zu-Vorrichtung-Kommunikation, eines Hinweises, dass das Ressourcenelement für ein Teilen durch die erste Vorrichtung (UE1) verfügbar ist, und
- Nutzen des Ressourcenelements, welches durch die erste Vorrichtung (UE1) geteilt wird, für eine Übertragung innerhalb des drahtlosen Kommunikationsnetzwerks (NW), wobei das Nutzen des Ressourcenelements auf einem zweiten Kriterium basiert, wobei sich das zweite Kriterium wenigstens auf Daten bezieht, welche sich auf einen Überlastungspegel innerhalb des Ressourcen-Pools beziehen.

11. Verfahren nach Anspruch 10, wobei der Hinweis, dass das Ressourcenelement für ein Teilen durch die erste Vorrichtung (UE1) verfügbar ist, innerhalb einer Nachricht (SSM), welche ein Teilen signalisiert, durch die Vorrichtung-zu-Vorrichtung-Kommunikation empfangen wird.

12. Verfahren nach einem der Ansprüche 10 und 11, wobei sich das zweite Kriterium ferner auf eines oder eine Kombination der folgenden bezieht:
- eine Vor-Konfigurationsnachricht, welche das Teilen des Ressourcenelements aktiviert oder deaktiviert,
- Daten, welche sich auf einen Kanalzustand des drahtlosen Kommunikationsnetzwerks (NW) beziehen,
- Daten, welche sich auf ein Zeitintervall beziehen, während welchem das Ressourcenelement für ein Teilen verfügbar ist,
- Daten, welche sich auf eine geographische Zone beziehen, welche dem Ressourcenelement zugeordnet ist, welches für ein Teilen verfügbar ist,
- Daten, welche sich auf eine Größe des Ressourcenelements beziehen, welches für ein Teilen verfügbar ist,
- Daten, welche sich auf wenigstens eine Dimension einer Übertragung des Ressourcenelements beziehen, welches für ein Teilen verfügbar ist, und
- Hardwarefunktionen (HW2) der zweiten Vorrichtung (UE2).

13. Verfahren nach Anspruch 12, wobei der Hinweis, dass das Ressourcenelement für ein Teilen durch die erste Vorrichtung (UE1) verfügbar ist, wenigstens Daten umfasst, welche sich auf eine Größe des Ressourcenelements beziehen, welches für ein Teilen verfügbar ist, wobei die zweite Vorrichtung (UE2) erhält:
- Daten, welche sich auf einen Überlastungspegel innerhalb des Ressourcen-Pools (RP) beziehen,
- eine Messung einer zweiten Ressourcennutzung der zweiten Vorrichtung (UE2) für wenigstens eine Übertragung von zweiten Datenpaketen von der zweiten Vorrichtung (UE2) zu wenigstens einer zweiten Empfangsvorrichtung,
wobei die zweite Vorrichtung (UE2) ferner in einer zweiten Speichereinheit (MEM-UE) wenigstens einen vordefinierten Überlastungspegel-Schwellenwert speichert,
und wobei die zweite Vorrichtung (UE2) die Messung der zweiten Ressourcennutzung der zweiten Vorrichtung (UE2) mit der Größe des Ressourcenelements vergleicht, welches für ein Teilen verfügbar ist,
und das zweite Kriterium erfüllt ist, wenn:
- der Überlastungspegel den Überlastungspegel-Schwellenwert überschreitet, und
- die Größe des Ressourcenelements, welches für ein Teilen durch die erste Vorrichtung (UE1) verfügbar ist, die Messung der zweiten Ressourcennutzung der zweiten Vorrichtung (UE2) überschreitet.

14. Verfahren nach einem der Ansprüche 10 bis 13, wobei die zweite Vorrichtung (UE2) zweite Datenpakete zu wenigstens einer zweiten Empfangsvorrichtung überträgt, unter Verwendung des Ressourcenelements, welches für ein Teilen durch die erste Vorrichtung (UE1) verfügbar ist.

15. Zweite Vorrichtung (UE2), welche eine zweite Verarbeitungsschaltung (PROC-UE, MEM-UE, COM-UE) umfasst, um das Verfahren wie in einem der Ansprüche 10 bis 14 beansprucht durchzuführen.

16. Computerprogrammprodukt, umfassend einen zweiten Satz von Programmanweisungscode, welcher auf einem zweiten computerlesbaren Medium für die Ausführung des Verfahrens nach einem der Ansprüche 10 bis 14 gespeichert ist.

## Revendications

1. Procédé mis en oeuvre par un premier dispositif (UE1) pour partager au moins un élément de ressources à l'intérieur d'un réseau de communication sans fil (NW), l'élément de ressources appartenant à un premier jeu de ressources radio allouées au premier dispositif (UE1) à l'intérieur d'un groupe de ressources (RP), le premier dispositif (UE1) utilisant une communication de dispositif à dispositif à l'intérieur du réseau de communication sans fil (NW),
et dans lequel le premier dispositif (UE1) émet, par l'intermédiaire de la communication de dispositif à dispositif, une indication que l'élément de ressources est disponible pour son partage, ladite indication étant émise sur la base d'un critère principal, ledit critère principal étant lié à au moins une valeur liée à un niveau d'encombrement à l'intérieur du groupe de ressources (RP).

2. Procédé selon la revendication 1, dans lequel le premier dispositif (UE1) émet un message de signalisation de partage (SSM) par l'intermédiaire de la communication de dispositif à dispositif, ledit message de signalisation de partage (SSM) contenant au moins ladite indication que l'élément de ressources est disponible pour son partage.

3. Procédé selon la revendication 1 et 2, dans lequel le critère principal est en outre lié à l'un ou à une combinaison de ce qui suit :
- un message de pré-configuration activant ou désactivant le partage de l'élément de ressources,
- une valeur liée à une disponibilité de l'élément de ressources,
- une valeur liée à une condition de canal du réseau de communication sans fil (NW), et
- des capacités matérielles (HW1) du premier dispositif (UE1).

4. Procédé selon l'une quelconque des revendications précédentes, dans lequel l'indication que l'élément de ressources est disponible pour son partage inclut l'un ou une combinaison de ce qui suit :
- au moins un bit pour indiquer une position de l'élément de ressources disponible pour son partage,
- au moins un bit pour indiquer une taille de l'élément de ressources disponible pour son partage,
- au moins un bit pour indiquer un intervalle de temps au cours duquel l'élément de ressources est disponible pour son partage,
- au moins un bit pour indiquer une zone géographique associée à l'élément de ressources disponible pour son partage.

5. Procédé selon l'une quelconque des revendications précédentes, dans lequel l'élément de ressources est disponible pour son partage dans au moins une dimension de transmission, ladite dimension de transmission comprenant au moins un élément parmi un jeu d'éléments comprenant :
- une dimension d'espace de transmission,
- une dimension de polarisation de transmission, et
- une dimension de temps-fréquence de transmission.

6. Procédé selon la revendication 3, prise en combinaison avec la revendication 4 et 5, le premier dispositif (UE1) obtenant une indication d'un niveau d'encombrement à l'intérieur du groupe de ressources (RP), le premier dispositif (UE1) stockant en outre dans une première unité de mémoire (MEM-UE) au moins un seuil de niveau d'encombrement prédéfini, et dans lequel le critère principal est rempli si le niveau d'encombrement dépasse le seuil de niveau d'encombrement.

7. Procédé selon la revendication 6, prise en combinaison avec la revendication 4 et 5, le premier dispositif (UE1) :
- obtenant une mesure physique d'une première occupation de ressources du premier dispositif (UE1), et
- déterminant une valeur liée à une première utilisation de ressources du premier dispositif (UE1) pour au moins une transmission de premiers paquets de données depuis le premier dispositif (UE1) à au moins un premier dispositif de réception,
et dans lequel le critère principal est rempli si :
- le niveau d'encombrement dépasse le seuil de niveau d'encombrement, et
- la mesure physique de la première occupation de ressources du premier dispositif dépasse la valeur liée à la première utilisation de ressources du premier dispositif (UE1).

8. Premier dispositif (UE1) comprenant un premier circuit de traitement (PROC-UE, MEM-UE, COM-UE) pour réaliser le procédé selon l'une quelconque des revendications 1 à 7.

9. Produit programme informatique comprenant un premier jeu de codes d'instructions de programme stocké sur un premier support lisible par ordinateur pour l'exécution du procédé selon l'une quelconque des revendications 1 à 7.

10. Procédé mis en oeuvre par un second dispositif (UE2) pour utiliser au moins un élément de ressources à l'intérieur d'un réseau de communication sans fil (NW), ledit élément de ressources appartenant à un premier jeu de ressources radio réservées à un premier dispositif (UE1) à l'intérieur d'un groupe de ressources (RP), le premier dispositif (UE1) et le second dispositif (UE2) utilisant une communication de dispositif à dispositif à l'intérieur du réseau de communication sans fil, le procédé comprenant :
- la réception, par l'intermédiaire de la communication de dispositif à dispositif, d'une indication que l'élément de ressources est disponible pour son partage par le premier dispositif (UE1), et
- l'utilisation de l'élément de ressources partagé par le premier dispositif (UE1) pour une transmission à l'intérieur du réseau de communication sans fil (NW),
dans lequel l'utilisation de l'élément de ressources est basée sur un critère secondaire, ledit critère secondaire étant lié à au moins une donnée liée à un niveau d'encombrement à l'intérieur du groupe de ressources.

11. Procédé selon la revendication 10, dans lequel l'indication que l'élément de ressources est disponible pour son partage par le premier dispositif (UE1) est reçue à l'intérieur d'un message de signalisation de partage (SSM) par l'intermédiaire de la communication de dispositif à dispositif.

12. Procédé selon la revendication 10 et 11, dans lequel le critère secondaire est en outre lié à l'un ou à une combinaison de ce qui suit :
- un message de pré-configuration activant ou désactivant l'utilisation de l'élément de ressources,
- une donnée liée à une condition de canal du réseau de communication sans fil (NW),
- une donnée liée à un intervalle de temps au cours duquel l'élément de ressources est disponible pour son partage,
- une donnée liée à une zone géographique associée à l'élément de ressources disponible pour son partage,
- une donnée liée à une taille de l'élément de ressources disponible pour son partage,
- une donnée liée à une dimension de transmission de l'élément de ressources disponible pour son partage, et
- des capacités matérielles (HW2) du second dispositif (UE2).

13. Procédé selon la revendication 12, l'indication que l'élément de ressources est disponible pour son partage par le premier dispositif (UE1) incluant au moins une donnée liée à une taille de l'élément de ressources disponible pour son partage, le second dispositif (UE2) obtenant :
- une donnée liée à un niveau d'encombrement à l'intérieur du groupe de ressources (RP),
- une mesure d'une seconde utilisation de ressources du second dispositif (UE2) pour au moins une transmission de seconds paquets de données depuis le second dispositif (UE2) à au moins un second dispositif de réception,
le second dispositif (UE2) stockant en outre dans une seconde unité de mémoire (MEM-UE) au moins un seuil de niveau d'encombrement prédéfini,
et dans lequel le second dispositif (UE2) compare la mesure de la seconde utilisation de ressources du second dispositif (UE2) à la taille de l'élément de ressources disponible pour son partage,
et le critère secondaire est rempli si :
- le niveau d'encombrement dépasse le seuil de niveau d'encombrement, et
- la taille de l'élément de ressources disponible pour son partage par le premier dispositif (UE1) dépasse la mesure de la seconde utilisation de ressources du second dispositif (UE2).

14. Procédé selon l'une quelconque des revendications 10 à 13, dans lequel le second dispositif (UE2) transmet des seconds paquets de données à au moins un second dispositif de réception en utilisant l'élément de ressources disponible pour son partage par le premier dispositif (UE1).

15. Second dispositif (UE2) comprenant un second circuit de traitement (PROC-UE, MEM-UE, COM-UE) pour réaliser le procédé selon l'une quelconque des revendications 10 à 14.

16. Produit programme informatique comprenant un second jeu de codes d'instructions de programme stocké sur un second support lisible par ordinateur pour l'exécution du procédé selon l'une quelconque des revendications 10 à 14.
